# EUROPEAN PATENT APPLICATION

(11) **EP 2 210 765 A1**
(43) Date of publication of application: **28.07.2010**
(21) Application number: 10000116.3
(22) Date of filing: 08.01.2010
(51) Int. Cl.: B60N 2/00, G06K 9/00, G06T 7/00, B60R 21/015

(54) **Vehicle interior state recognition device and corresponding method**

(30) Priority: 21.01.2009 JP 2009011084; 02.03.2009 JP 2009047933; 02.03.2009 JP 2009047934
(71) Applicant: Mazda Motor Corporation, Aki-gun Hiroshima 730-8670 (JP)
(72) Inventor: Sakakida, Masafumi, Aki-gun Hiroshima 730-8670 (JP); Tomita, Toshihiko, Aki-gun Hiroshima 730-8670 (JP); Yamanishi, Mitsutoshi, Aki-gun Hiroshima 730-8670 (JP); Yamane, Keiko, Aki-gun Hiroshima 730-8670 (JP); Harada, Tsukasa, Aki-gun Hiroshima 730-8670 (JP); Hayashi, Kazuhito, Aki-gun Hiroshima 730-8670 (JP)
(74) Representative: Müller-Boré & Partner Patentanwälte

(57) **Abstract**

A vehicle interior state recognition device comprises an illuminating means **15** for illuminating infrared rays into a vehicle compartment, an image pick-up means **16** for picking up an image inside the vehicle compartment into which the infrared rays are illuminated by the illuminating means, and a recognizing means **18** for recognizing specified information based on the image picked up by the image pick-up means. Objects of the image picked up by the image pick-up means include a seat **3** which is movable relative to a vehicle body and a passenger **B** seated in the seat, and the recognizing means **18** determines a size of the passenger **B** by comparing contour of the seat **3** with contour of the passenger **B** on the image picked up. Accordingly, the body size of the passenger seated in the seat can be determined accurately.

## Description

The present invention relates to a vehicle interior state recognition device which comprises an illuminating means for illuminating infrared rays into a vehicle compartment, an image pick-up means for picking up an image inside the vehicle compartment into which the infrared rays are illuminated by the illuminating means, and a recognizing means for recognizing specified information based on the image picked up by the image pick-up means. Further, the invention relates to a corresponding method.

Conventionally, the detection of an existence of any passenger who is seated in a seat has been conducted in order to determine the necessity of inflation of an airbag, for example. According to a well known art, there are provided a pressure sensor or a strain sensor at a seat face, which detect whether the passenger is seated in the seat or not.

Herein, in case the pressure sensor or the strain sensor are provided as described above, there is a concern that the detection of passenger would become inaccurate due to fluctuations of detections of the sensor which may be caused by position changes of the passenger, vehicle's vibrations during traveling or the like. Further, even if the detection of the passenger is detected, the size of the passenger may not be detected. Accordingly, there is a concern that the inflation control of airbag would not be properly executed. For example, if the airbag was inflated forcibly despite the child having a relatively small body size, the safety of the passenger would be rather deteriorated.

Therefore, not only the detection of the passenger's existence but the detection of the passenger's body size or the like have been recently conducted based on images of a vehicle compartment which are picked up. For example, US Patent Application Publication No. 2007/176402 discloses the detection system of vehicle interior state which comprises the illumination device to illuminate infrared rays toward the seat, such as the driver's seat or the passenger's seat, from the vehicle ceiling portion, the image pick-up device which is provided at the ceiling portion above and in front of the seat and picks up images of the seat toward which the infrared rays are illuminated by the illumination unit, and the control device which generates information showing the condition or the like of the passenger seated in the seat based on the images picked up by the image pick-up device.

International Patent Publication No. W02005/032887, meanwhile, discloses the passenger detection system in which successive images of light stripes projected onto an object by a light curtain positioned by a light source positioner are picked up, 3-D surface model is generated by applying the image processing to the images which are obtained by subtracting background images from the successive images picked up, and the detection of the passenger or the determination of the passenger's body size are conducted by using the 3-D surface model.

The systems disclosed in the above-described publications have an advantage that the proper airbag-inflation control can be provided because not only the detection of the passenger's existence but the detection of the passenger's body size (i.e., adult or child) can be conducted. However, in case the seat is provided to be movable relative to a vehicle body, the distance between the image pick-up device and an object, an image of which is to be picked up, may change depending on the seat's position, so that the detected size of the passenger or the like may also change improperly despite the same passenger. Accordingly, there is a problem in that the size of the passenger seated in the seat or a positional relationship between the seat and the passenger seated in the seat would not be accurately determined.

The present invention has been devised in view of the above-described problem, and an object of the present invention is to provide a vehicle interior state recognition device which can accurately determine the size of the passenger seated in the seat or a positional relationship between the seat and the passenger seated in the seat.

The object is solved by the features of the independent claims. Preferred embodiments of the present invention are subject of the dependent claims.

According to the present invention, there is provided a vehicle interior state recognition device, comprising an illuminating means for illuminating infrared rays into a vehicle compartment, an image pick-up means for picking up an image inside the vehicle compartment into which the infrared rays are illuminated by the illuminating means, and a recognizing means for recognizing specified information based on the image picked up by the image pick-up means, wherein objects of the image picked up by the image pick-up means include a seat which is movable relative to a vehicle body and a passenger seated in the seat, and the recognizing means determines a size of the passenger seated in the seat and/or a positional relationship between the seat and the passenger seated in the seat by comparing at least part of contour of the seat with at least part of contour of the passenger seated in the seat on the image picked up.

According to the present invention, since the size of the passenger seated in the seat or the positional relationship between the seat and the passenger seated in the seat are determined based on comparison of the contours of the seat and the passenger, such determinations can be made accurate even in case the seat moves relative to the vehicle body. Further, if the results of such determinations are used in the airbag-inflation control device for the vehicle crash, for example, the proper airbag-inflation control according to the passenger's body size or the positional relationship between the seat and the passenger can be provided, thereby ensuring the safety at the vehicle crash.

According to an embodiment of the present invention, the seat comprises a couple of seats which are disposed substantially side by side in a vehicle width direction, and the image pick-up means is provided at a specified position which enables the image pick-up means to pick up both images of the seats at the same time. Thereby, the images of the two seats can be picked up at the same time without using any particular camera which has an extremely-enlarged image field (e.g., a camera with a fisheyes lens or a wide-angle lens), and thus the proper images without any improper strain can be obtained.

According to another embodiment of the present invention, the image pick-up means is provided at around a pillar member which extends substantially vertically along a side wall of the vehicle compartment. Thereby, the disposition place of the image pick-up means can be ensured properly by using the pillar member.

According to another embodiment of the present invention, the seats, images of which are picked up by the image pick-up means, are a driver's seat and a passenger's seat, and the image pick-up means is provided at around an upper end portion of a front pillar as the pillar member. Thereby, the images of the driver's seat and the passenger's seat can be properly picked up by the image pick-up means provided at the front pillar.

According to another embodiment of the present invention, a projecting portion is provided at around an upper end portion of a pillar trim which forms an inside face of the front pillar, and the image pick-up means is stored in the projecting portion. Thereby, the disposition place of the image pick-up means can be ensured properly without obstructing disposition of any other parts (e.g., a curtain airbag) which is stored inside the front pillar. Further, since the projecting portion is provided at around the upper end portion of the front pillar, it can be effectively prevented that the front view through a windshield is obstructed by the projecting portion.

According to another embodiment of the present invention, the recognizing means determines the size of the passenger seated in the passenger's seat by comparing the contour of the passenger's seat with the contour of the passenger seated in the passenger's seat on the image picked up, and the recognizing means further determines a degree of concentration on a driving operation of the passenger seated in the driver's seat based on a position of a head portion of the passenger seated in the driver's seat. Thereby, the degree of concentration on the passenger's driving operation can be properly determined by using the same image as that for determining the size of the passenger seated in the passenger's seat. Thus, any car accident which may be caused by an inattentive driving or a driver's sleeping can be prevented by proper warnings.

According to another embodiment of the present invention, the seats, images of which are picked up by the image pick-up means, are a driver's seat and a passenger's seat, the image pick-up means is provided at a side portion of the vehicle compartment on the side of the driver's seat, and there is provided a recognizing member which is comparable with the size of the passenger at an inside face of a seatback of the passenger's seat. Thereby, even in case the body side of the passenger seated in the passenger's seat is so large that the recognition of the passenger's seat from the front becomes poor, the recognizing member can be properly recognized by the image pick-up means provided at the side portion of the vehicle compartment on the side of the driver's seat. Thus, the body size of the passenger seated in the passenger's seat can be determined accurately regardless of the condition.

According to another embodiment of the present invention, the seat is equipped with a headrest at an upper end thereof, the height of the headrest being adjustable, and the recognizing means further determines the height of the headrest relative to the passenger seated in the seat based on an image of the headrest which is picked up by the image pick-up means. Thereby, the height of the headrest relative to the passenger seated in the seat can be determined accurately based on the picked-up image of the headrest. Further, if the result of such determination is used in a warning device and the like, for example, the height of the headrest can be maintained within a proper range, so that the safety at the vehicle crash (the rear crash, in particular) can be effectively improved.

According to another embodiment of the present invention, the image pick-up means is provided at a front side position of the vehicle compartment which enables the image pick-up means to pick up the image of the headrest from the front side of the vehicle. Thereby, the image of the contour of the headrest can be picked up without any interruption by the head portion of the passenger seated, so that the height of the headrest can be determined accurately despite the passenger's head portion.

According to another embodiment of the present invention, the seat comprises a couple of seats which are disposed substantially side by side in a vehicle width direction, and the image pick-up means is provided at the specified position which enables the image pick-up means to pick up the images of the both headrests of the seats from the front side of the vehicle at the same time. Thereby, the images of the two seats can be picked up at the same time without using any particular camera which has an extremely-enlarged image field (e.g., a camera with a fisheyes lens or a wide-angle lens), and thus the proper images without any improper strain can be obtained.

According to another embodiment of the present invention, the image pick-up means is provided at around a pillar member which extends substantially vertically along a side wall of the vehicle compartment. Thereby, the disposition place of the image pick-up means can be ensured properly by using the pillar member.

According to another embodiment of the present invention, the seats, images of which are picked up by the image pick-up means, are a driver's seat and a passenger's seat, and the image pick-up means is provided at around an upper end portion of a front pillar as the pillar member. Thereby, the images of the respective headrests of the driver's seat and the passenger's seat can be properly picked up by the image pick-up means provided at the front pillar.

According to another embodiment of the present invention, a rear seat is provided behind the driver's seat and the passenger's seat, and the image pick-up means picks up respective images of a headrest of the rear seat and the headrests of the driver's seat and the passenger's seat at the same time. Thereby, the images of the headrests of the seats in the vehicle compartment can be picked up by the single image pick-up means, so that the height of each headrest can be efficiently and properly determined based on the picked-up images.

According to another embodiment of the present invention, the objects of the image picked up by the image pick-up means include a head portion of the passenger seated in the driver's seat, and the recognizing means further determines a degree of concentration on a driving operation of the passenger seated in the driver's seat based on a position of the picked up image of the head portion of the passenger seated in the driver's seat. Thereby, the degree of concentration on the passenger's driving operation can be properly determined by using the same image as that for determining the height of the headrest. Thus, any car accidents which may be caused by an inattentive driving or a driver's sleeping can be prevented by proper warnings.

According to another embodiment of the present invention, the recognizing means determines a difference in the height between the headrest of the seat and the head portion of the passenger seated in the seat. Thereby, it can be determined easily and surely whether or not the height of the headrest is set at a proper position which can properly support the head portion of the passenger seated, and if the result of such determination is used in a warning device and the like, the safety at the vehicle crash can be more effectively improved.

According to another embodiment of the present invention, a couple of first seats which are disposed substantially side by side and a second seat which is provided behind the first seats are provided in the vehicle compartment, the first seats and the second seat have seatbelts for restraining passengers seated therein, each of the seatbelts having a shoulder belt portion for restraining a shoulder portion of each of the passengers, the image pick-up means is provided at an upper portion of the vehicle compartment which is located in front of seatbacks of the first seats, the illuminating means comprises a first illuminating means which is provided at an upper portion of the vehicle compartment which is located in front of the seatbacks of the first seats and illuminates infrared rays rearward and a second illuminating means which is located in back of the seatbacks of the first seats and in front of a seatback of the second seat and illuminates infrared rays rearward, and the recognizing means determines at least a sitting state of the passenger seated in the second seat. Specifically, the above-described recognizing means recognizes an application state of the shoulder belt portion of the second seat. Thereby, the accurate recognition of the shoulder portion of the second seat can be provided, enabling the recognition of the state in front of the seatbacks of the first seats. Accordingly, the application state of the seatbelts of the seats which are arranged longitudinally can be recognized accurately without any costs up.

According to another embodiment of the present invention, the second illuminating means illuminates near-infrared rays substantially at the same time as the first illuminating means does. Thereby, the shoulder portion of the second seat can be recognized more accurately.

According to another embodiment of the present invention, the image pick-up means is positioned substantially at a central portion of the vehicle compartment in a vehicle width direction. Thereby, the image area picked up by the image pick-up means can be enlarged properly.

According to another embodiment of the present invention, the recognizing means recognizes a state of a specified portion of the shoulder belt portion which is located near a vehicle-body inside portion. Thereby, the shoulder belt portion of the second seat can be recognized more accurately because the specified portion of the shoulder belt portion which is located near the vehicle-body inside portion may be located not to overlap with the passenger seated when viewed from the vehicle front.

According to another embodiment of the present invention, the shoulder belt portion extends from a pillar at the vehicle-body inside portion toward the passenger seated in the second seat in an application state thereof, and the recognizing means recognizes the state of the shoulder belt portion between the pillar and the passenger seated in the second seat, Thereby, the shoulder belt portion of the second seat can be accurately recognized.

According to another embodiment of the present invention, the recognizing means further recognizes an application state of the shoulder belt portion of the first seats. Thereby, the states of both the shoulder belt portions of the first and second seats can be recognized.

According to a further aspect, there is provided a method of recognizing a vehicle interior state comprising the steps of:
illuminating infrared rays into a vehicle compartment;
picking up an image inside the vehicle compartment into which the infrared rays are illuminated by said illuminating means; and
recognizing specified information based on the image picked up by said image pick-up means,
   wherein objects of the image picked up by said image pick-up means include a seat which is movable relative to a vehicle body and a passenger seated in the seat, and
determining a size of the passenger seated in the seat and/or a positional relationship between the seat and the passenger seated in the seat by comparing at least part of contour of the seat with at least part of contour of the passenger seated in the seat on the image picked up.

Further, the invention provides a computer program product comprising computer-implemented instructions which, when loaded and executed on a suitable system, can perform the steps of the method, as described above, wherein the computer program product is particularly embodied as a computer-readable storage medium, as a signal and/or as a data stream.

Other features, aspects, and advantages of the present invention will become apparent from the following description which refers to the accompanying drawings.
FIG. **1** is a side view showing a whole constitution of a vehicle to which a vehicle interior state recognition device according to a first embodiment of the present invention is applied.
FIG. **2** is a plan view of the vehicle.
FIG. **3** is a plan view of a vehicle compartment of the vehicle.
FIG. **4** is a perspective view of an upper portion of a front pillar.
FIG. **5** is a sectional view taken along line V-V of FIG. **4****.**
FIG. **6** is a diagram showing an example of an image picked up by an image pick-up means.
FIG. **7** is a block diagram showing a control system of the vehicle interior state recognition device.
FIG. **8** is a flowchart of a control operation executed by the vehicle interior state recognition device.
FIGS. **9A-9C** are diagrams explaining a determination process of a degree of concentration of a passenger seated in a driver's seat; FIG. **9A** is an image of a passenger's head portion when the passenger concentrates; FIG. **9B** is an image of the passenger's head portion when the passenger has an inattentive driving; FIG. **9C** is an image of the passenger's head portion when the passenger sleeps.
FIG. **10** is a diagram showing a comparative example for explaining effects of the present embodiment.
FIG. **11** is a diagram showing a modification of the present embodiment.
FIG. **12** is a side view showing the whole constitution of the vehicle to which a vehicle interior state recognition device according to a second embodiment of the present invention is applied.
FIG. **13** is a plan view of the vehicle compartment of the vehicle.
FIG. **14** is a diagram showing an example of the image picked up by the image pick-up means.
FIG. **15** is a block diagram showing a control system of the vehicle interior state recognition device according to the second embodiment.
FIG. **16** is a flowchart of a control operation executed by the vehicle interior state recognition device according to the second embodiment.
FIG. **17** is a diagram explaining how to determine the height of a headrest.
FIG. **18** is a diagram explaining a modification of the second embodiment.
FIG. **19** is a side view of a vehicle **A** according to a third embodiment of the present invention.
FIG. **20** is a plan view showing a state of the vehicle compartment of the present embodiment.
FIG. **21** is a perspective view showing a restraint portion **B.**
FIG. **22A** is a diagram showing a distinction pattern **D1** formed on an upper face of a seatbelt **B11;** FIG. **22B** is a diagram showing a distinction pattern **D2** formed on a back face of the seatbelt **B11.**
FIG. **23** is a view which is seen rearward from an image pick-up portion **220.**
FIG. **24** is an elevation view of seats **S3a, S3b, S3c.**
FIG. **25** is a block diagram showing a functional constitution of a state recognizing device **200.**
FIG. **26** is a flowchart of the state recognizing device **200.**
FIG. **27A** is a specific flowchart of a seatbelt application warning processing (step **S211**); FIG. **27B** is a specific flowchart of a headrest height warning processing (step **S212**).

Hereinafter, preferred embodiments of the present invention will be described referring to the accompanying drawings. Although the embodiments are described separately, it should be understood that single feature(s) of one embodiment may be combined with another embodiment and vice versa.

### EMBODIMENT 1

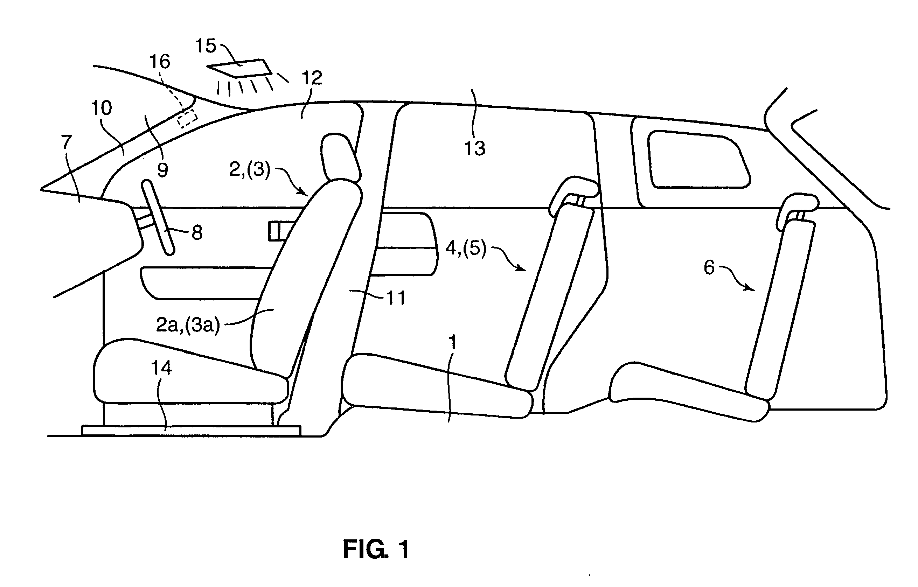

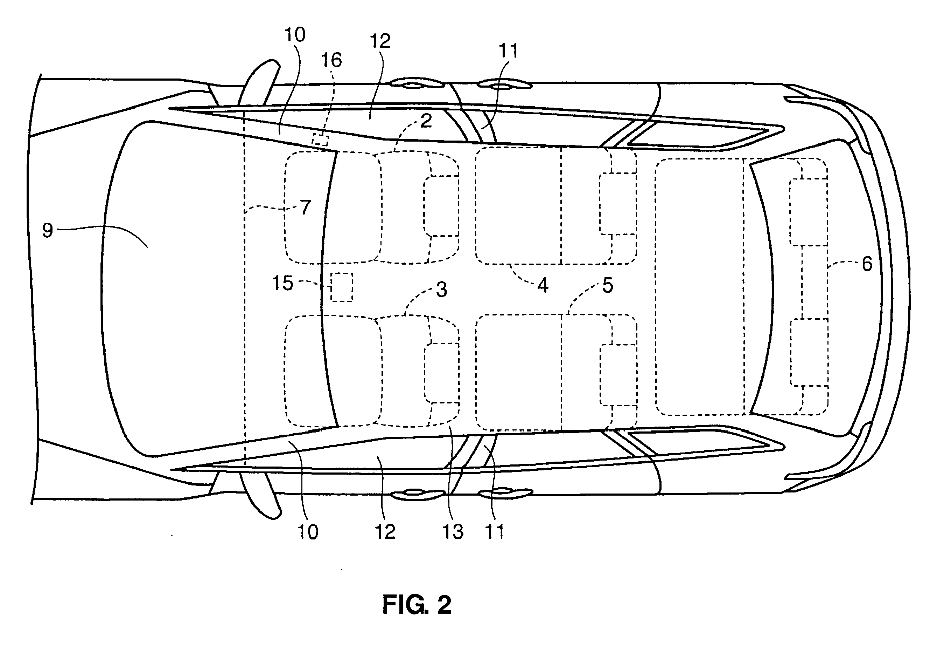

FIGS. **1** through **3** show a whole constitution of a vehicle to which a vehicle interior state recognition device according to a first embodiment of the present invention is applied. The vehicle illustrated in these figures is a so-called minivan type of automotive vehicle which has in total three rows of seats on a vehicle floor **1.** Specifically, a driver's seat **2** and a passenger's seat **3** are provided at a front portion on the vehicle floor **1,** and behind these seats are provided first separate rear seats **4, 5** and a second integral rear seat **6** (a so-called bench type seat). The driver's seat 2 and the passenger's seat **3** are supported to be moveable longitudinally along seat slide rails **14** which are arranged on the vehicle floor **1.**

An instrument panel **7** which extends in a vehicle width direction is provided in front of the driver's seat **2** and the passenger's seat **3.** A steering wheel **8** is arranged at a portion of the instrument panel **7** on the side of the driver's seat **2.** A windshield **9** is disposed above the instrument panel **7,** and a pair of front pillars **10** which extends substantially vertically with the same slant angle as the windshield 9 is provided at both sides of the windshield **9** (i.e., both-side walls of a front end of the vehicle compartment). Further, in back of the pair of front pillars **10** is provided a pair of center pillars **11** which extends over a range from the vehicle floor **1** to a roof **13.** A side glass **12** for a front door is disposed between the center pillar **11** and the front pillar **10**.

An illuminating means **15** which illuminates infrared rays into the vehicle compartment is provided substantially at the roof **13** at a position which is near the front end portion of the roof **13** in front of seatbacks **2a, 3a** of the seats **2, 3.** Specifically, the illuminating means **15** of the present embodiment is comprised of plural infrared LEDs which illuminate near-infrared rays, for example.

Further, an image pick-up means **16** which picks up images of the inside of the vehicle compartment is provided substantially at the right-side front pillar **10** on the driver's seat side. This image pick-up means **16** of the present embodiment is preferably comprised of a CCD camera which is sensitive to the infrared rays illuminated by the illuminating means **15.** Thus, the image pick-up means **16** can pick up any images in the illumination area of the infrared rays from the illuminating means **15** properly.

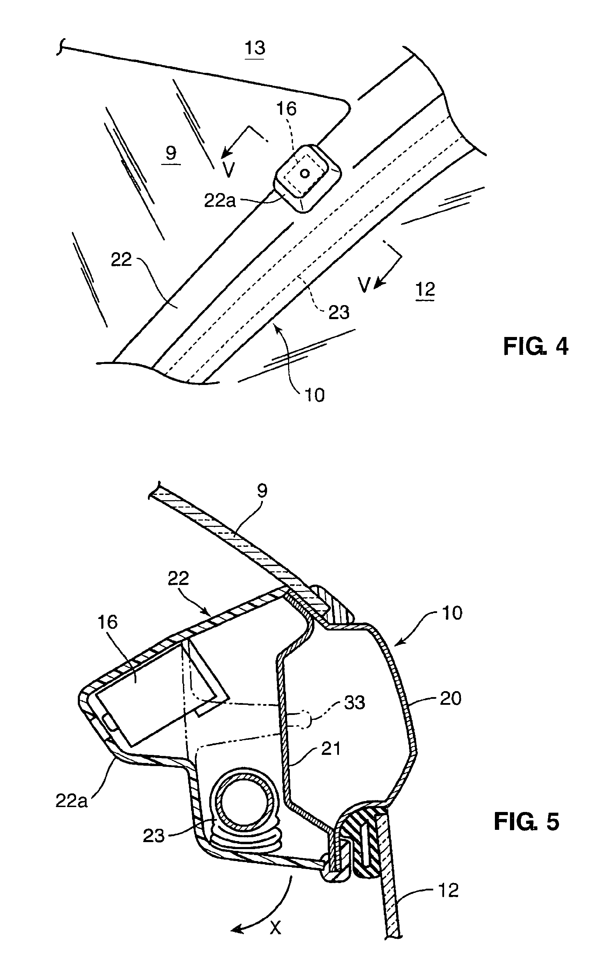

FIG. **4** is a perspective view of an upper portion of the front pillar **10** (on the right) at which the image pick-up means **16** is provided. FIG. **5** is a sectional view showing detailed disposition portion of the image pick-up means **16.** This front pillar **10** preferably comprises outer and inner panels **20, 21** which are made of metal panel members and a pillar trim **22** which is made of a resin panel member and covers an inner face of the inner panel **21.** A projecting portion **22a** which projects substantially toward the vehicle inside is provided at a wall portion of the pillar trim **22** which corresponds to around an upper end portion of the front pillar **10** (near the roof **13).** The image pick-up means **16** is preferably disposed inside the projecting portion **22a.**

The pillar trim **22** is preferably detachably attached to the inner panel **21** preferably via a clip **33** (FIG. **5****).** A curtain airbag **23** which inflates at the vehicle side crash is arranged between the pillar trim **22** and the inner panel **21** and extends along a lower-side side portion of the front pillar **10.** Herein, in case of the vehicle side crash, the clip **33** is disengaged according to the inflation of the curtain airbag **23,** so that the pillar trim **22** is deformed in a direction of an arrow **X** in FIG. **5****.** Then, the curtain airbag **23** inflates out of a gap created by the above-described deformation of the pillar trim **22** and then covers the side glass **12.**

The image pick-up means **16** which is disposed inside the projecting portion **22a** is preferably located closer to the windshield **9** than the curtain airbag **23.** That is, the curtain airbag **23** is arranged along the lower-side side portion of the front pillar **10** which corresponds to the front side portion of the side glass **12,** and the projecting portion **22a** and the image pick-up means **16** are preferably arranged at a location which is above and in front of the curtain airbag **23** near the windshield **9.**

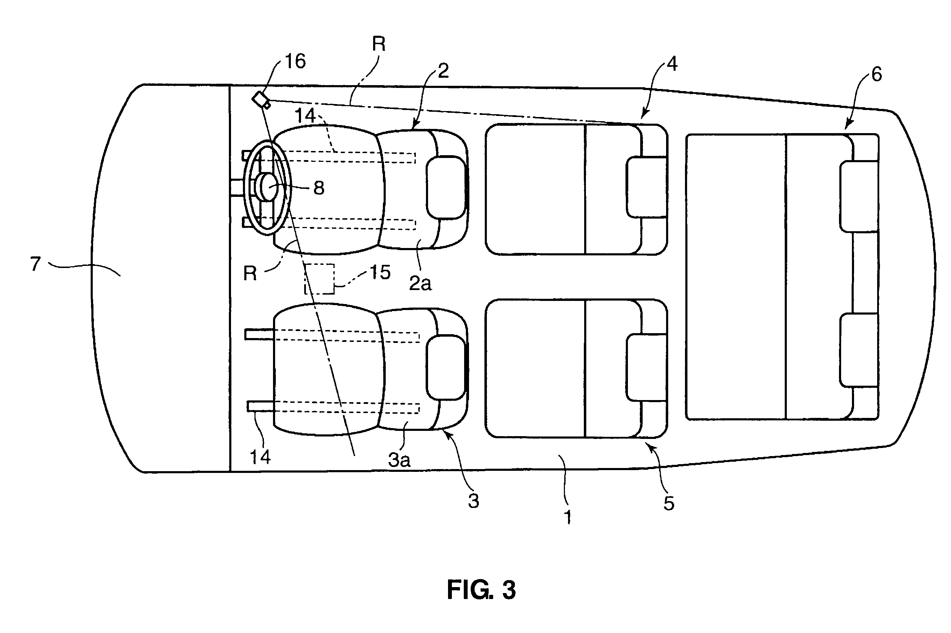

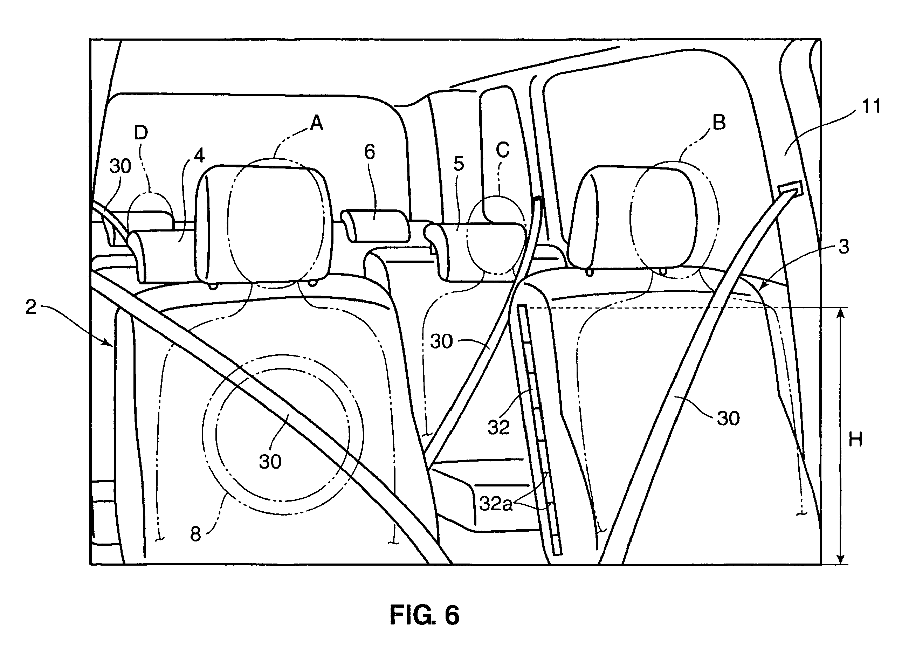

The image pick-up means **16** is disposed to be directed downward and obliquely rearward as shown in FIG. **3** so that the plural seats including at least the driver's seat **2** and the passenger's seat **3** can be contained within its image pick-up area **R.** Images of the vehicle compartment which are picked up by the image pick-up means **16** are shown in FIG. **6****.** Specifically, according this shown example, a passenger is seated in each seat of the driver's seat **2,** passenger's seat **3,** left-side first rear seat **5,** and second rear seat **6,** who is denoted by reference characters **A, B, C,** and **D,** respectively. Hereinafter, the passenger **A** of the driver's seat **2** is referred to as a driver' seat passenger, the passenger **B** of the passenger's seat 3 is referred to as a passenger's seat passenger, and the passengers **C, D** are referred to as a rear seat passenger. In figures, a reference numeral **30** denotes a seatbelt, and each of the passengers **A-D** is restrained by the seatbelt **30.**

As shown in FIG. **6****,** the images picked up by the image pick-up means **16** preferably include images of the driver's seat **2,** passenger's seat **3,** first rear seats **4, 5,** and second rear seat **6.** Increasing properly the number of the infrared LEDs, for example, may enable the images of the rear seats **4, 5, 6** to be picked up as well as the front seats **2, 3.** In the present embodiment, however, the image pick-up means **16** is configured to pick up at least the images of the driver's seat **2** and the passenger's seat **3** (and those passengers **A, B).**

Further, as shown in FIG. **6****,** a recognizing member **32,** which is made from a material to reflect the near-infrared rays illuminated by the illuminating means **15** and formed in a belt shape, is preferably provided at an inside face of the seatback **3a** of the passenger's seat **3.** This recognizing member **32** is provided in order to facilitate the determination of the body size of the passenger **B** of the passenger's seat **3,** which will be described in detail later. Thus, the recognizing member **32** extends over a specified length along the side face of the seat back **3a,** and has a scale **32a** to give standard information for determining the body size of the passenger's seat passenger **B.** This scale **32a** may be applied in various types of scale, which is not limited to the one having some indication lines but the one having a surface treatment for providing different reflection ratios thereon.

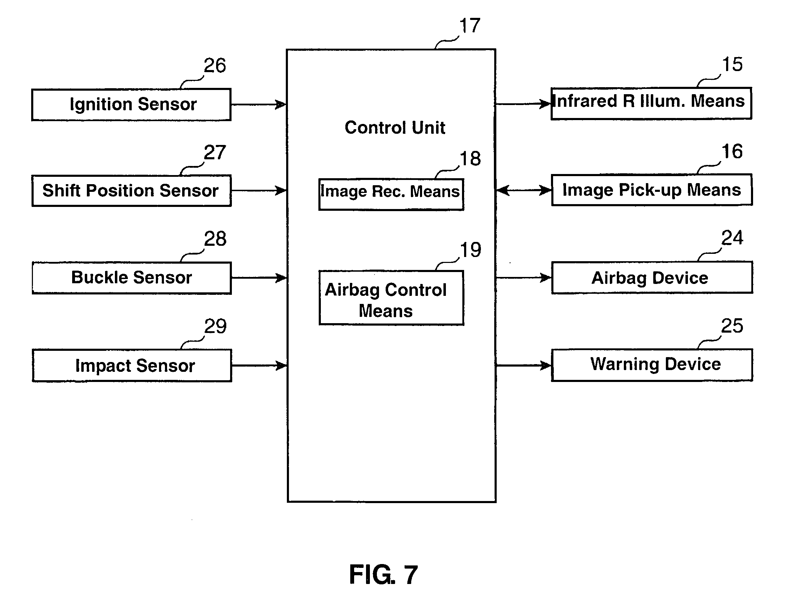

FIG. **7** is a block diagram showing a control system of the vehicle interior state recognition device of the present embodiment. A control unit **17** in this figure is a device to control respective components of the vehicle totally, which comprises well-known CPU, ROM, RAM, HDD and so on. To this control unit **17** are preferably electrically coupled the above-described illuminating means **15** and image pick-up means **16** and an airbag device **24,** a warning device **25,** an ignition sensor **26,** a shift position sensor **27,** a buckle sensor **28,** and a crash sensor **29.**

The airbag device **24** is a device including the airbags provided at respective portions in the vehicle compartment, inflators to inflate these airbags, and so on. The above-described curtain airbag **23** (FIGS. **4** and **5****)** and other airbags, such as an airbag for the driver provided at the steering wheel **8,** an airbag for the passenger provided at the instrument panel **7** in front of the passenger's seat **3** (not illustrated), are included by the airbag device **24.**

The above-described warning device **25** is a device to warn the passenger that some events which are not preferable have occurred. For example, in case the inattentive driving or the sleeping of the driver's seat passenger **A** are detected by a recognizing means **18,** which will be described below, the warning device **25** operates and warns the passenger. The warning device **25** preferably comprises functions of indicating warning display on the instrument panel **7,** generating warning sounds with alarm or the like, and so on.

The above-described ignition sensor **26** is a sensor to detect ON/OFF of an ignition device to start a drive source (e.g., engine) of the vehicle. The above-described shift position sensor **27** is a sensor to detect a position (P range, D range, R range and others) of a shift lever, not illustrated. The above-described buckle sensor **28** is a sensor which is provided at a buckle (not illustrated) for fixing the above-described seatbelts **30** to the seats. This sensor **28** detects whether the seatbelt **30** is used or not by detecting whether a tongue at the tip of the seatbelt **30** is engaged with the above-described buckle or not.

The above-described crash sensor **29** is a sensor to detect the occurrence of the (own) vehicle crash (the frontal crash or the side crash), which may be comprised of a G senor to detect an acceleration acts on the own vehicle and the direction of the acceleration, for example. The above-described control unit **17** comprises the recognizing means **18** and an airbag control means **19.**

The recognizing means **18** recognizes various information based on the images of the vehicle compartment which is supplied from the image pick-up means **16.** For example, this means **18** has functions of determining a degree of concentration on a driving operation of the driver's seat passenger **A** and a body size of the passenger's seat passenger **B.** The airbag control means **19** executes the inflation control of the airbag device **24.** For example, this control means **19** has functions of inflating the airbag of the airbag device **24** according to the kind of the vehicle crash, the frontal crash or the side crash, and executing or prohibiting the inflation of the airbag for the passenger's seat according to the body size of the passenger's seat passenger **B** which is recognized by the recognizing means **18.**

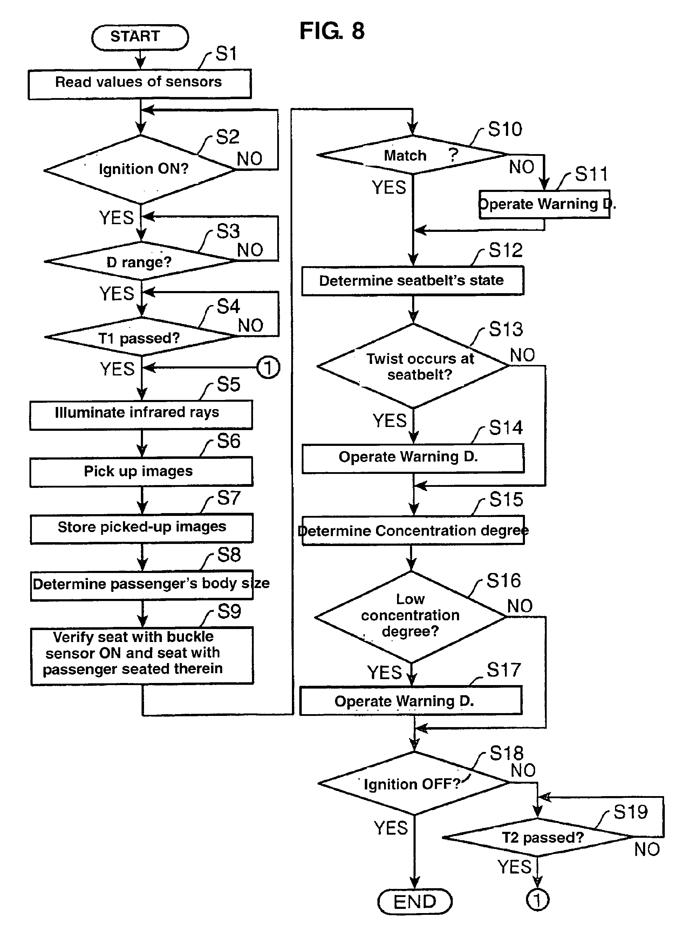

FIG. **8** is a flowchart of a control operation executed by the control unit **17.**
The flowchart of FIG. **8** shows the control operation of the image recognition by the recognizing means **18.** After this flowchart starts, detections of the ignition sensor **26,** shift position sensor **27,** buckle sensor **28,** and so on are read in for executing the control (step **S1).**

Next, it is determined whether the ignition is ON or not based on the detection of the ignition sensor **26** which has been read in the step **S1** (step **S2).** When the determination is YES with the ignition ON, it is determined whether the shift position is D range or not based on the detection of the shift position sensor **27** (step **S3).**

When the determination is YES in the step **S3** with the D range (i.e., the vehicle is traveling), it is determined whether or not a predetermined time T1 (1-3 seconds, for example) has passed from the shift change to the D range (step **S4).** When the determination is YES with the confirmation of time T1's passage, the control of illuminating the near-infrared rays into the vehicle compartment by the illuminating means **15** (step **S5)** is started.

Next, the image pick-up control by the image pick-up means **16** is executed in a state in which the near-infrared rays are illuminated into the vehicle compartment (step **S6).** The images picked up by the pick-up means **16** include at least respective images of the driver's seat **2** and/or its passenger **A** and the passenger's seat **3** and its passenger **B** as shown in FIG. **6****.** These images picked up are supplied to the recognizing means **18** and stored after a specified image processing applied (step **S7).**

Subsequently, the control of determining the body size of the passenger's seat passenger **B** is executed by the recognizing means **18** (step **S8).** Specifically, the body size of the passenger's seat passenger **B** is determined by comparing a passenger's sitting height H with the recognizing member **32** which is provided at the seatback **3a** of the passenger's seat **3** based on the picked up images (FIG. **6****)** read in the step **S7.**

The determination results of the body size of the passenger's seat passenger **B** (step **S8)** are used in the inflation control of the airbag device **24** by the airbag control means **19.** For example, when the sitting height of the passenger's seat passenger **B** is shorter than a specified height, so it is determined that the passenger **B** is like a child or a relatively short adult who belongs to a 5% shortest American Female group (AF05), the inflation of the airbag for the passenger' seat is prohibited or restrained even if the vehicle crash occurs. Thereby, the airbag for the passenger' seat is inflated at a normally high speed only for an adult having the normally large body size, so that the safety of the passenger can be ensured properly.

Next, the control of verifying the seat with the seatbelt **30** engaged with the buckle and the buckle sensor **28** ON and the seat actually having the passenger seated therein is executed (step **S9).** Specifically, the seat in which the passenger is actually seated is identified based on the images read in the step **S7,** and this identified seat and the seat in which the buckle sensor is ON (that is, the seatbelt is used) are verified, thereby confirming matching or mismatching of these.

After this, it is determined whether the seat with the buckle sensor ON completely matches the seat having the passenger seated therein or not based on the verification results in the step **S9** (step **S10).** When the determination of NO is determined, the warning control for the passenger is executed by operating the warning device **25** (step **S11).** For example, if there is at least one seat having the buckle sensor OFF despite the passenger being actually seated therein (that is, in case there is any seat in which its seatbelt **30** is not actually used by the passenger seated therein), the determination in the step **10** is NO, so that the warning is conduced in the step **S11.**

Then, the state of the seatbelt **30** in its use state is confirmed based on the images of the vehicle compartment read in the step **S7** (step **S12).** It is determined whether any twist occurs at any seatbelt **30** or not based on this confirmation (step **S13).** When the twist occurs at the seatbelt **30** and the determination is YES, the warning control for the passenger is executed by operating the warning device **25** (step **S14).**

Next, the control of determining the degree of concentration of driving operation of the driver's seat passenger **A** is executed by the recognizing means **18** based on the images read in the step **S7** (step **S15).**

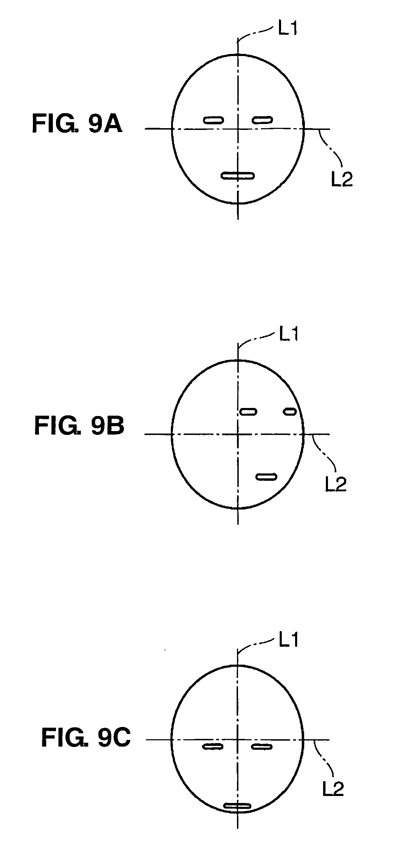

FIGS. **9A-9C** are diagrams explaining the determination process of the degree of concentration of the driver's seat passenger **A.** In these figures, vertical and lateral lines **L1, L2** illustrated by one-dotted lines show the standard lines which are defined by the position of the head portion of the passenger **A.** The above-described recognizing means **18** determines the degree of concentration of the passenger **A** by determining the positional relationship of the position of both eyes and mouth of the passenger **A** to the above-described standard lines **L1, L2.** FIG. **9A** shows the positions of the passenger's eyes and mouth when the passenger **A** focuses on the driving operation (i.e., the passenger is looking straight forward). In this case, the driver's eyes are located in the upper area above the standard line **L2,** and the driver's mouth is located on the standard line **L1.**

Meanwhile, FIG. **9B** shows a state in which the passenger **A** is having its inattentive driving. In this case, the driver's both eyes may be located on the right or the left relative to the standard line **L1.** FIG. **9C** shows a state in which the passenger **A** is sleeping. In this case, the driver's both eyes may be located in the lower area below the standard line **L2.** The recognizing means **18** determines that the degree of concentration of the passenger **A** is low (that is, the passenger is having its inattentive driving or sleeping) in case the states of FIG. **9B** or FIG. **9C** have continued for a specified period of time or longer.

Returning to the flowchart of FIG. **8****,** the control will be further described. After the determination of the degree of concentration of the passenger **A,** it is determined in step **S16** whether or not the degree of concentration of the passenger **A** is low, that is, whether or not the states of the inattentive driving or the sleeping shown in FIGS. **9B, 9C** have continued for the specified period of time or longer. When the determination of the low degree of concentration of the passenger **A** and the determination is YES, the warning control for the passenger **A** is executed by operating the warning device **25** (step **S17).**

Then, it is determined based on the detection of the ignition sensor **26** whether the ignition is OFF or not (step **S18).** When the determination of YES is made, the control flow ends. When it is determined that the vehicle's driving continues and the determination of NO is made, the control returns to the step **S5** after a predetermined specified period of time **T2** (10 seconds, for example) has passed (step **S19),** and then the same controls are repeated. Thus, the above-described processing of illuminating the near-infrared rays into the vehicle compartment, picking up the images, and so on are repeated every the specified time **T2.**

As described above, the vehicle interior state recognition device of the present embodiment comprises the illuminating means **15** which illuminates the near-infrared rays into the vehicle compartment, the image pick-up means **16** which picks up the images inside the vehicle compartment into which the near-infrared rays are illuminated by the illuminating means **15,** and the recognizing means **18** which recognizes the specified information based on the images picked up by the image pick-up means **16.** Herein, the objects of the images picked up by the image pick-up means **16** include the driver's seat **2** and the passenger's seat **3** which are movable relative to the vehicle body and so on, and the recognizing means **18** determines the size of the passenger **B** seated in the passenger's seat by comparing the recognizing member **32** of the passenger's seat with the passenger **B** seated in the passenger's seat on the image picked up. Thereby, the body size of the passenger's seat passenger **B** can be determined accurately.

That is, according to the present embodiment, since the driver's seat **2** and the passenger's seat **3** are supported to be movable longitudinally along the seat slide rails **14** on the vehicle floor **1,** the size of the passengers **A, B** of the seats **2, 3** may change as the distance between the seats **2, 3** and the image pick-up means **16** changes due to the longitudinal move of the seats **2, 3.** Accordingly, there is the concern that the body size of the passenger's seat passenger **B** may not be determined accurately only by conducting the image recognition of the contour of the passenger's seat passenger **B** simply. According to the present embodiment, however, the determination of the body size of the passenger's seat passenger **B** can be conducted based on the comparison with the recognizing member **32** provided at the passenger's seat **3,** so that that determination can be made accurately despite the relative move of the passenger's seat **3** to the vehicle body. Further, if the results of this determination are used in the airbag-inflation control device for the vehicle crash, for example, the proper airbag-inflation control according to the body size of the passenger's seat passenger **B,** thereby ensuring the safety at the vehicle crash.

Further, according to the present embodiment, as shown in FIGS. **9A-9C****,** the degree of concentration on the driving operation of the driver's seat passenger **A** (the inattentive driving or the driver's sleeping) is determined based on the position of the head portion of the passenger **A** which is picked up by the image pick-up means **16.** Thereby, the degree of concentration on the driving operation of the driver's seat passenger **A** can be properly determined by using the same image as that for determining the size of the passenger's seat passenger **B.** Thus, any car accidents which may be caused by the inattentive driving or the driver's sleeping can be prevented by proper warnings.

Moreover, according to the present embodiment, as shown in FIGS. **1-3****,** the image pick-up means **16** is provided substantially at the front pillar **10** which extends substantially vertically along the side wall of the front end of the vehicle compartment at the specified position which enables the image pick-up means **16** to pick up both images of the driver's seat **2** and the passenger's seat **3** at the same time. Thereby, the images of the two seats can be picked up at the same time without using any particular camera which has an extremely-enlarged image field (e.g., a camera with a fisheyes lens or a wide-angle lens), and thus the proper images without any improper strain can be obtained.

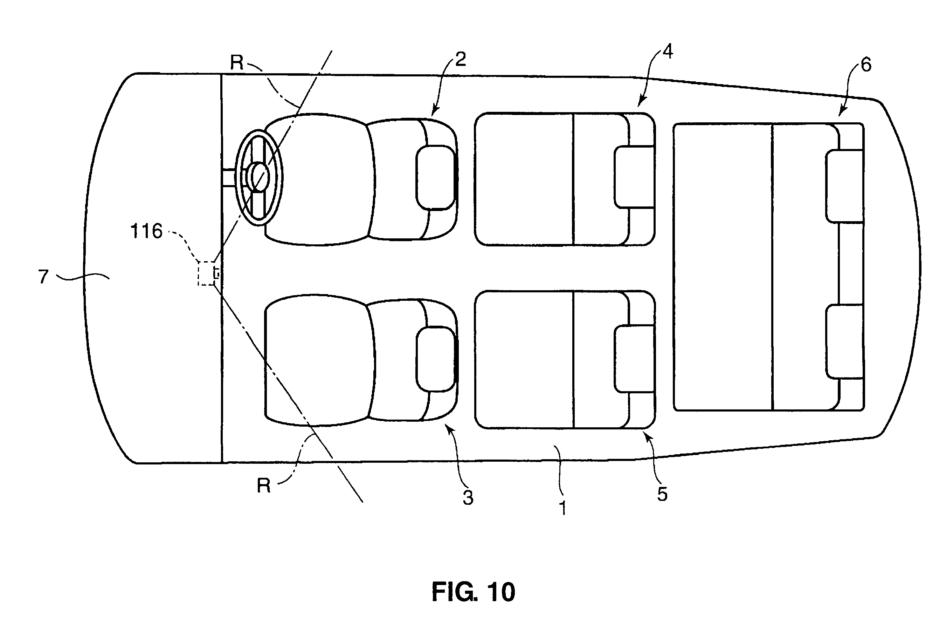

Herein, while an image pick-up means **116** could be provided at the central portion of the instrument panel **7** provided at the front end of the vehicle compartment as shown in FIG. **10****,** this layout would require a rather large pick-up area **R** of the image pick-up means **116** in order to capture the images of the both seats **2, 3** at the same time. This might need to use a particular camera, such as a camera with a fisheyes lens or a wide-angle lens, and cause a problem in that the image captured would have an improper strain. However, since the vehicle compartment is picked up by the image pick-up means **16** provided approximately at the front pillar **10** located at the side of the vehicle compartment according to the present embodiment, the images of the two seats **2, 3** can be properly picked up at the same time without using any particular camera described above and without any improper strain. Consequently, the body size of the passenger's seat passenger **B** and the degree of concentration of the driver's seat passenger **A** can be determined accurately based on the images picked up.

In particular, according to the present embodiment, as shown in FIGS. **4** or **5****,** the projecting portion **22a** is provided approximately at the pillar trim **22** which forms the inside face of the front pillar **10,** and the image pick-up means **16** is stored in this projecting portion **22a.** Thereby, the disposition place of the image pick-up means **16** can be ensured properly without obstructing disposition of any other parts (e.g., the curtain airbag **23)** which is stored inside the front pillar **10.** Further, since the projecting portion **22a** is provided at around the upper end portion of the front pillar **10,** it can be effectively prevented that the front view through the windshield **9** is obstructed by the projecting portion **22a.**

Further, since the above-described projecting portion **22a** and the image pick-up means **16** are disposed on the side of the windshield **9** from the curtain airbag **23** which is stored inside the front pillar **10** (between the pillar trim **22** and the inner panel **21),** the inflation of the curtain airbag **23** is not obstructed by the image pick-up means **16** and any other members, thereby ensuring the proper inflation of the curtain airbag **23** and the safety of the passenger.

Moreover, according to the present embodiment, the image pick-up means **16** is preferably provided at the front pillar **10** on the side of the driver's seat (on the right side in the figures), and the recognizing member **32** is preferably provided at the inside face of the seatback **3a** of the passenger's seat **3** as a comparative object for determining the body size of the passenger's seat passenger **B.** Thereby, even in case the body side of the passenger's seat passenger **B** is so large that the recognition of the passenger's seat **3** from the front becomes poor, the recognizing member **32** can be properly recognized by the image pick-up means **16** provided at the side portion of the vehicle compartment on the side of the driver's seat. Thus, the body size of the passenger's seat passenger **B** can be determined accurately regardless of the condition.

In case a side airbag is provided at the outside face of the seatback **3a** for the vehicle side crash, the above-described recognizing member **32** on the inside face of the seatback **3a** may be properly disposed without interrupting the inflation of the side airbag.

Herein, while the images of the driver's seat **2** and the passenger's seat **3** are picked up by the image pick-up means **16** which is provided at the front pillar 10 and the degree of concentration of the driver's seat passenger **A** and the body size of the passenger's seat passenger **B** are determined based on the picked-up images according to the present embodiment, in case there exists an airbag which inflates in front of the rear' seat passenger (passengers **C** and **D** shown in FIG. **6****),** the body sizes of these passengers **C, D** may be determined in the same manner for the passenger's seat passenger **B** in order to determine the inflation of the above-described airbag according to the passenger's body size.

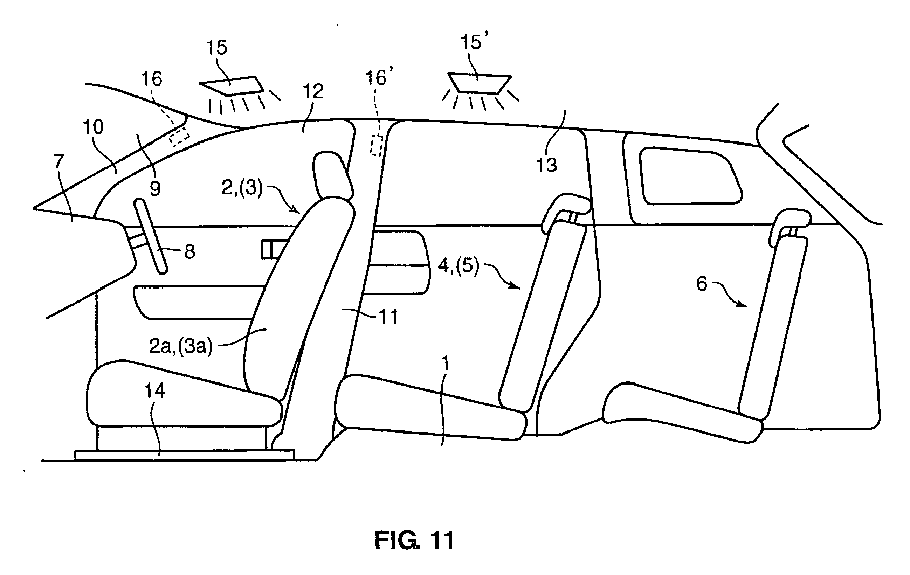

Herein, there is a concern that only the image pick-up means **16** which is disposed at the front pillar **10** could not capture the images of the above-described rear seat's passengers **C, D.** Thus, it may be preferable that an additional image pick-up means **16'** be provided at the center pillar **11** as shown in FIG. **11****.** This image pick-up means **16'** can pick up the images of these passengers **C, D** without any interruption by the driver's seat **2** and the passenger's seat **3,** which can provide the more accurate determination of the passenger's body size. Further, an additional illuminating means **15'** may be preferably provided at the central portion of the roof **13** above the first rear seats **4, 5** for obtaining more clear images picked up.

While the illuminating means **15** is provided at the roof **13** and the image pick-up means **16** is provided at the front pillar **10** as shown in FIGS. **1-3** and others according to the above-described embodiment, these means **15, 16** may be provided at the front pillar **10** together. In this case, however, the projecting portion **22a** (FIGS. **4** and **5****)** may be required to project further and also this attachment of these means **15, 16** may cause more complex attaching structures in order to ensure the sufficient disposition space for the means **15, 16.** Accordingly, the above-described embodiment with the means **15, 16** which are provided separately may be more advantageous in this regard.

Moreover, the manner of determining the body size of the passenger's seat **B** accurately is not limited to the one of the above-described embodiment. For example, the height of the seatback 3a of the passenger's seat 3 may be memorized in the recognizing means **18,** and the determination of the body size of the passenger's seat passenger **B** may be made based on the comparison with the memorized height of the seatback **3a.** In any case the body size of the passenger's seat passenger **B** can be determined accurately by comparing the contour of the passenger's seat **3** with the contour of the passenger's seat passenger **B** on the image picked up.

While the driver's seat **2** and the passenger's seat **3** are supported to be movable longitudinally along the seat slide rails **14** according to the above-described embodiment, these seats **2, 3** may be equipped with a tilt mechanism to move their seat faces vertically or a lateral slide mechanism to move the seats in the vehicle width direction. Even if the seats are configured to be moveable in any direction, according to the present invention, the passenger's body size can be determined accurately regardless of the position of the seats.

### EMBODIMENT 2

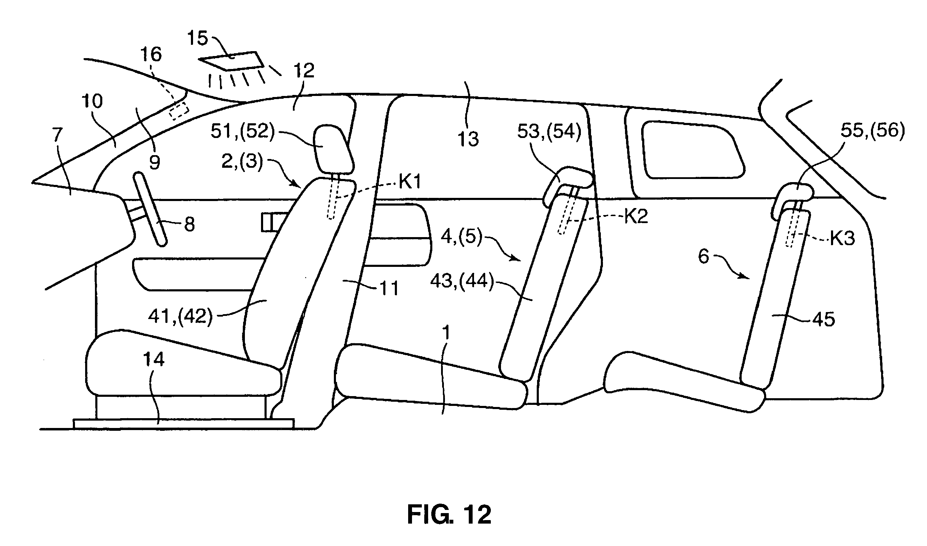

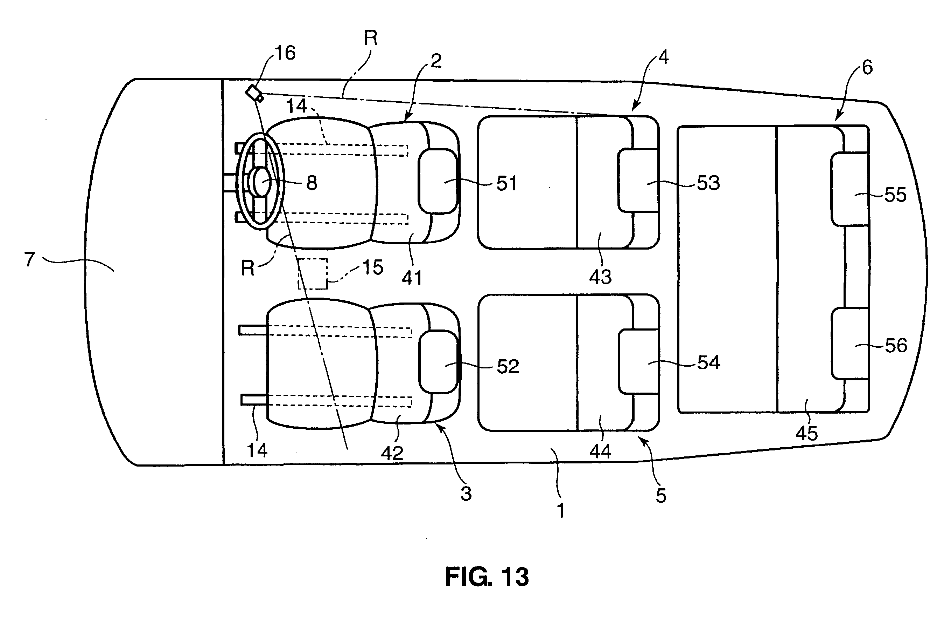

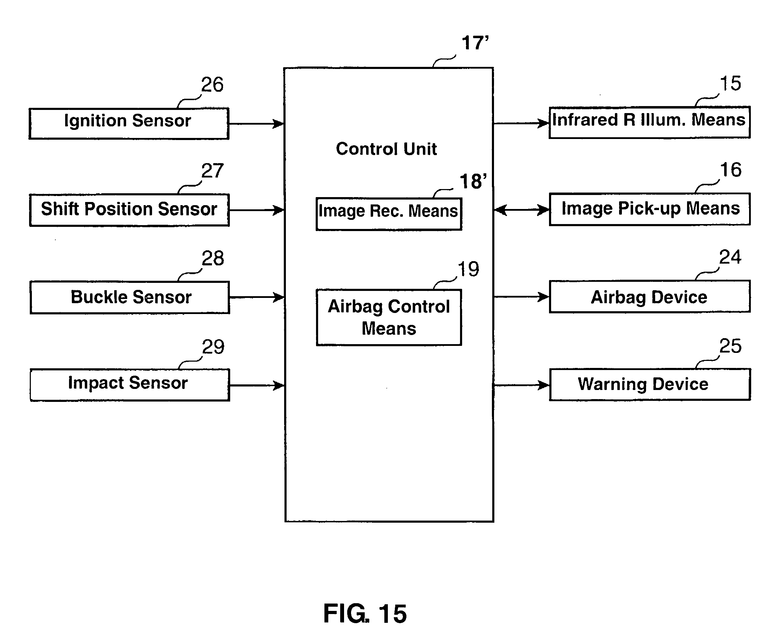

A second embodiment will be described referring to FIGS. **12** through **18****.** According to the second embodiment, a recognizing means **18'** further determines the height of a headrest relative to the passenger seated in the seat based on an image of the headrest which is picked up by the image pick-up means **16,** in addition to the determination functions described in the above-described first embodiment. Hereinafter, the same constitutions of the second embodiment as those of the first embodiments are denoted by the same reference characters, detailed descriptions of which are omitted here.

At upper portions of seatbacks **41, 42** of the driver's and passenger's seats **2, 3** are provided headrests **51, 52** to support rear head portions of the passengers. These headrests **51, 52** are supported at the seatbacks **41, 42** via slide poles **K1** which slide vertically relative to the seatbacks **41, 42** (FIG. **12****).** The heights of the headrests **51, 52** are respectively adjustable within a specified range by the vertical moves of the slide poles **K1.**

The same structure is preferably applied to the first rear seats **4, 5** and the second rear seat **6** as well. That is, headrests **53, 54** are supported at the seatbacks **43, 44** of the first rear seats **4, 5** via slide poles **K2,** so that the heights of the headrests **53, 54** are respectively adjustable within a specified range. Further, headrests **55, 56** are supported at both sides of a seatback **45** of the second rear seat **6** via slide poles **K3,** so that the heights of the headrests **55, 56** are respectively adjustable within a specified range by the vertical moves of the slide poles **K3.**

In the illustrated example, the headrests **53 - 56** of the first and second rear seats **4 - 6,** which are different from the normal type of headrests **51, 52** (a so-called pillow type of headrest) of the driver's seat **2** and the passenger's seat **3,** are a so-called saddle type of headrest which has a reverse-L shape in the side view. This is because the vertical length of the seat including the headrests **53 - 56** is made properly small, so that the seatbacks **43 - 45** of the rear seats **4 - 6** can be folded forward properly in a fully flat state without any interruption by the headrests **53** - 56. Accordingly, in case such fully flat arrangement is not required, the headrests **53** - 56 of the rear seats **4 - 6** may be comprised of the pillow type of headrest like the ones of the driver's seat **2** and the passenger's seat **3.**

The recognizing means **18'** has the function of determining the heights of the respective headrests **51 - 56** of the seats **2 - 6** in addition to the functions of determining the degree of concentration of the driving operation by the passenger **A** and determining the body size of the passenger **B** seated in the passenger's seat **3.**

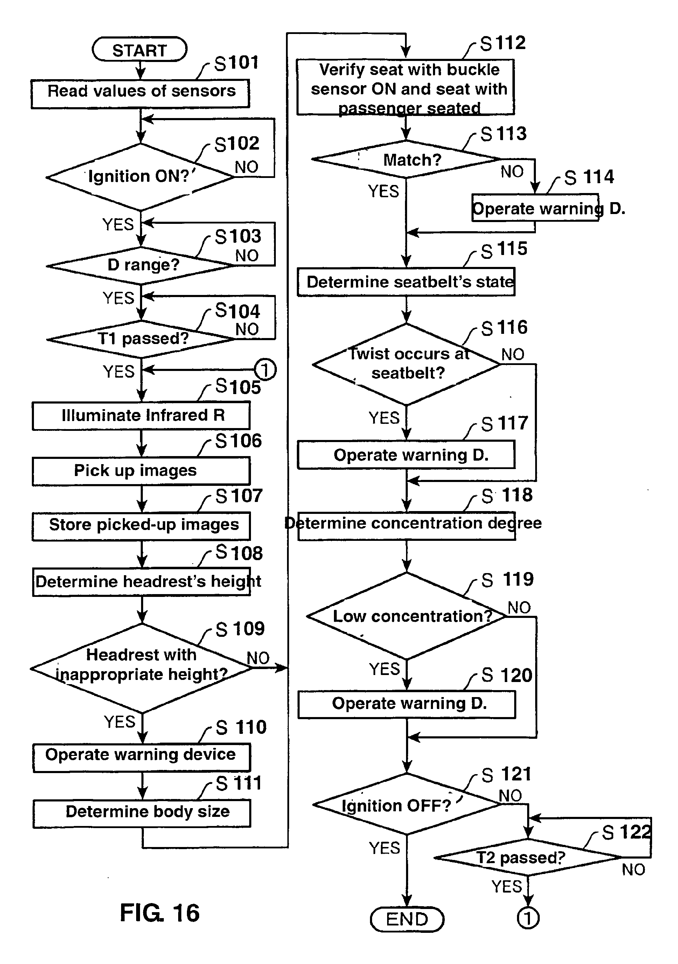

Hereinafter, the control of a control unit **17'** of the present embodiment will be described referring to a flowchart shown in FIG. **16****.** Herein, steps **S101 - S107** and **S111 - S122** of FIG. **16** are substantially the same as the steps **S1 - S7** and **S8 - S19** of FIG. **8** of the above-described first embodiment, and steps **S108 - S110** of FIG. **16** are new according to the second embodiment. Accordingly, the control according to the second embodiment will be described referring to the steps **S108 - S110** mainly, omitting detailed descriptions of the steps **S101 - S107** and **S111 - S122.**

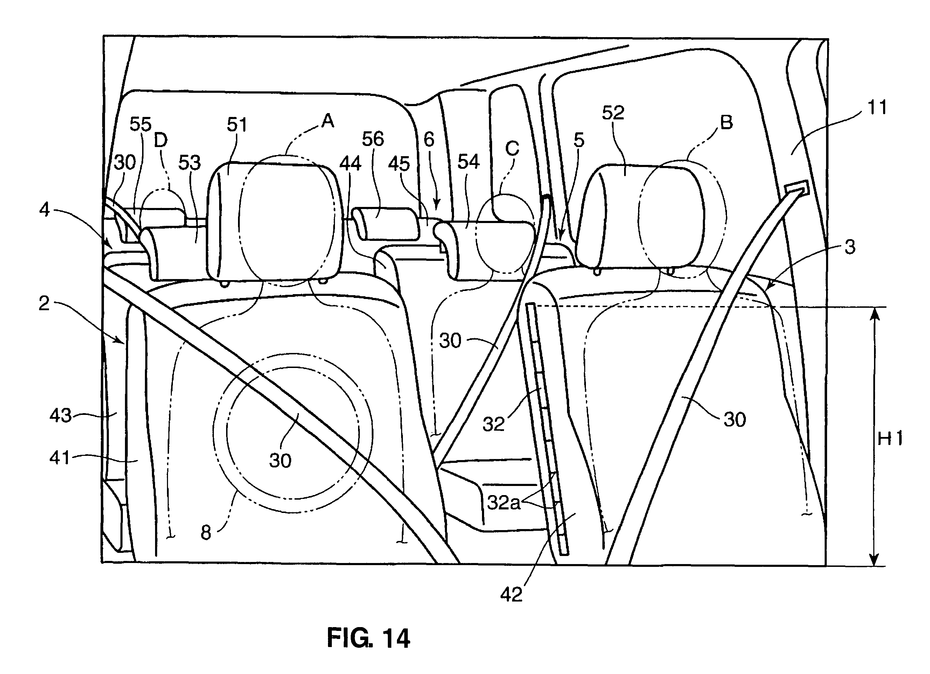

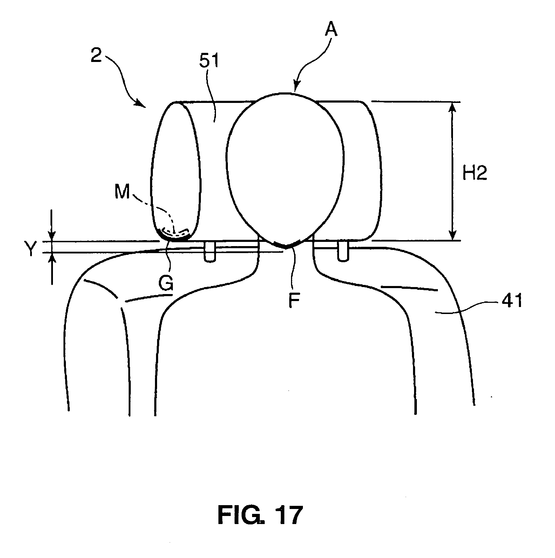

After the step **S107,** the image pick-up means **1** determines the heights of the headrests **51 - 56** of the seats **2 - 6** based on the images (FIG. **14****)** read in the step **S107** (step **S108).** FIG. **17** is a diagram explaining how the heights of the headrests **51 - 56** are determined. Herein, the determination of the height of the headrest 51 of the driver's seat **2** will be explained as an example. The determinations of the heights of the other headrests are the same.

The height of the headrest **51** of the driver's seat **2** is determined by comparing contour of the head portion of the passenger (driver's seat passenger **A)** as shown in FIG. **17****.** Specifically, a lower side **G** of a side portion of the headrest **51** and a chin portion **F** of the driver's seat passenger **A** are recognized on the image, and it is determined whether a gap (difference in level) **Y** between those is within a predetermined specified range (± 5cm, for example). Thus, it is determined whether the height of the headrest **51** is appropriate or not. Herein, if an indication mark **M** is attached to the lower side **G** of the side portion of the headrest **51** as shown by a one-dotted line of FIG. **17****,** for example, the recognition of that portion **G** may be made easy and sure, thereby obtaining the gap **Y** accurately.

The gap **Y** between the lower side **G** of the side portion of the headrest **51** and the chin portion **F** of the driver's seat passenger **A** can be obtained as actual measurements by comparing it with the actual height **H2** of the headrest **51,** for example. That is, if the actual measurements data of the height **H2** of the headrest **51** has been memorized in a memory of the control unit **17',** the actual measurements of the gap **Y** may be obtained by using this memorized data as a reference data.

The above-described determination of the height of the headrest may be applied to and executed for the other seats (the passenger's seat **3,** the first and second rear seats **4 - 6)** in the same manner. Herein, this height determination may be conducted only for the seats with the passengers seated therein. For example, the example shown in FIG. **14** the passengers are seated only in the passenger's seat **3,** the left first rear seat **5** and the right side of the second rear seat **6.** The height determination may be conducted for the headrests **52, 54, 55** for the passengers **B, C, D** except the headrest **51** for the driver's seat passenger **A.**

There is a case in which a child is seated in the seat other than the driver's seat **2.** In this case, the chin portion of the child may be positioned at a level which is rather lower than the lower side portion of the headrest. Therefore, the same manner of the determination as that described above may not work properly. Accordingly, in case the child is identified from the size of the head portion or the sitting height (the sitting height **H1** of FIG. **14****),** it is preferable that the above-described height determination of the headrest be prohibited.

Further, there is a case in which it may be determined that the height of any one of the headrests **51 - 56** is inappropriate (i.e., the above-described gap **Y** is out of the specified range) due to an improper temporary sitting position of the passenger (for example, the passenger is seated having a forward inclined upper body). Therefore, in case the above-described improper sitting style of the passenger is recognized, it is preferable that the above-described height determination of the headrest for the seat in which such a passenger is seated be prohibited. Thereby, the height determination of the headrest is conducted for the seat in which the passenger is seated in the proper sitting position, so that the appropriate height determination of the headrest can be provided.

Returning to the flowchart of FIG. **16****,** after the above-described height determination of the headrest is completed, the image pick-up means **18'** determines based on the height determination whether any headrest with an inappropriate height exists or not (step **S109).** That is, if there is any headrest which has the gap **Y** shown in FIG. **17** which is out of the specified range, the determination in the step **S109** is YES.

When the existence of the headrest having the inappropriate height is determined with YES determination result in the step **S109,** a warning control for the passenger is executed by operating the warning device **25** (step **S110).** For example, when it is determined that the height of the headrest **54** of the left first rear seat 5 is inappropriate, the warning device **25** emits any guidance alarm or the like which advises to correct the height of the headrest **54** of the first rear seat **5** (adjusts the slide pole **K2** (see FIG. **12****)** of the headrest **54** vertically) or creates an error display to indicate that situation.

As described above, according to the present embodiment, the recognizing means **18'** determines the height of the headrests **51 - 56** relative to the passengers seated in the seats based on the images of the headrests which are picked up by the image pick-up means **16.** Thereby, the heights of the headrests **51 - 56** relative to the passengers seated in the seats can be determined accurately based on the picked-up images of the headrests. Further, if the results of such determinations are used in the warning device and the like, the heights of the headrests can be maintained within the proper range, so that the safety at the vehicle crash (the rear crash, in particular) can be effectively improved.

More specifically, according to the present embodiment, the gaps **Y** between the lower sides **G** of the side portions of the headrests **51 - 56** and the chin portions **F** of the passengers are determined as the height determinations of the headrests **51 - 56** by the image pick-up means **18'** (FIG. **17****).** Thereby, it can be determined easily and surely whether or not the heights of the headrests **51 - 56** are set so as to properly support the head portions of the passengers seated, and the safety at the vehicle crash can be more effectively improved by the warning using the determination results.

Herein, while the image pick-up means **16** is provided at the right-side front pillar **10** on the side of the driver's seat **2** in the present embodiment and the images of the headrests **51 - 56** of the all seats disposed in the vehicle compartment are picked up by this single image pick-up means **16** in the present embodiment, the headrest **53** of the right-side first rear seat **4** and the right-side headrest **55** of the second rear seat **6,** which are positioned in back of the driver's seat **2,** may be possibly located in a hidden area, which is predictable from FIG. **14****,** so that there is a concern that the images of these particular headrests could not be properly picked up.

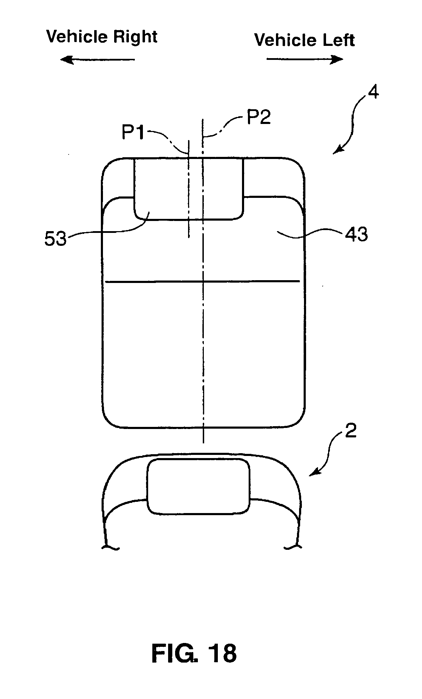

In this case, it may be considered to enlarge the widths of the headrests 53, 55 toward the right side of the vehicle which is the same side as the disposition side of the image pick-up means **16.** FIG. **18** shows an example in which the width of the headrest **53** of the first rear seat **4** is enlarged toward the right side of the vehicle. The center **P1** of the headrest **53** shown in this figure is offset toward the right side of the vehicle relative to the center **P2** of the sitting face, so that the width of a right-side part of the headrest **53** from the center **P2** of the sitting face is enlarged relatively. This arrangement of the headrest **53** can effectively prevent the above-described location of the headrest **53** from being in the hidden area of the front-side seat (the driver's seat **2),** thereby providing the proper determination of the height of the headrest **53.** This matter can be said for the right-side headrest **55** of the second rear seat **6** as well.

Further, while the gaps **Y** between the lower sides **G** of the side portions of the headrests **51 - 56** and the chin portions **F** of the passengers are detected to determine the height of the headrests **51 - 56** in the present embodiment, any other manner may be applied as long as the height of the headrest relative to the head portion of the passenger can be determined accurately. For example, the height of the headrest may be determined by obtaining a gap between the top of the passenger's head portion and the upper side of the headrest.

Further, while the above-described embodiment shows the case in which the present invention is applied to the mini-van type of vehicle equipped with the three row seats, the present invention can be, of course, applied to a vehicle equipped with the front and rear two row seats (e.g., a sedan type of vehicle) or a two-seater type of vehicle equipped with only the driver's seat and the passenger's seat.

### EMBODIMENT 3

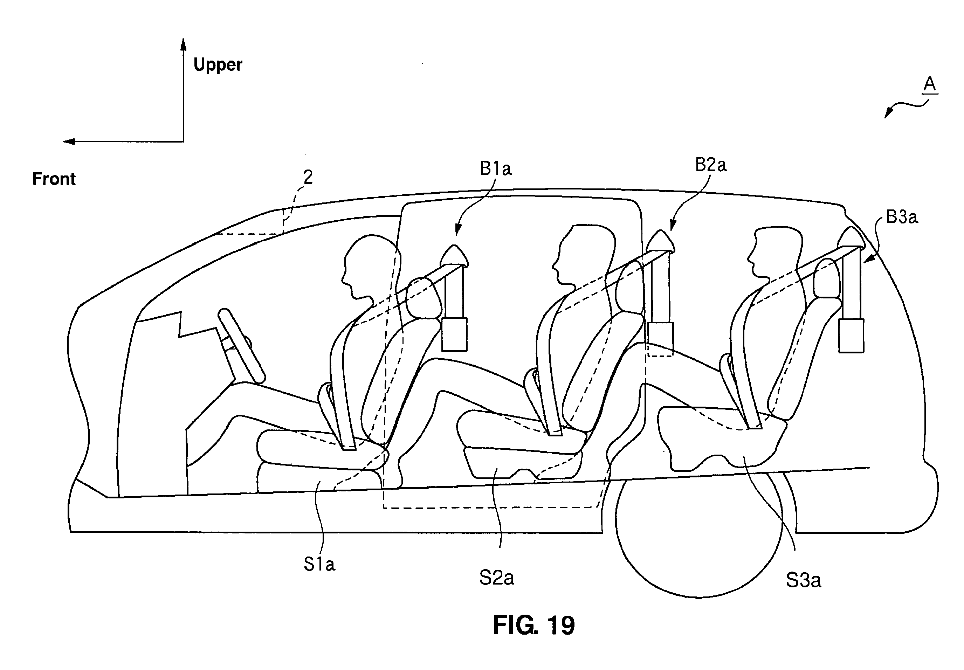

A third embodiment will be described referring to FIGS. **19** through **27****.**

A vehicle **A** comprises seats **S1a, S1b** (first seats) which are disposed substantially side by side in a vehicle compartment, seats **S2a, S2b** (second seat) which are disposed in back of the seats **S1a, S1b,** seats **S3a, S3b, S3c** which are disposed in back of the seats **S2a, S2b,** and a restraint portion **B** in which passengers seated in the seats are restrained.

The seat **S1a** is a driver's seat, and the seat **S1b** is a passenger's seat. The seats **S2a, S2b** are a second row seat for two passengers. The seats **S3a, S3b, S3c** are a third row seat which comprises a so-called bench seat for two passengers and a single seat for one passenger. Each of the seats has a longitudinally-moving mechanism (slide mechanism) and an inclination mechanism (reclining mechanism) which inclines a seatback thereof around its lower end portion longitudinally. Herein, while the present embodiment will be described in such a manner that the first row seats **S1a, S1b** is the first seats and the second row seats **S2a, S2b** are the second seat, the present invention may be applied in such a manner that the second row seats **S2a, S2b** are the first seats and the third row seats **S3a, S3b, S3c** are the second seat.

At both-side vehicle-body side portions are preferably provided A pillars **Pa,** B pillars **Pb,** C pillars **Pc** and D pillars **Pd** in this order from the vehicle front. A front door **FD** is arranged at an opening formed between the A pillar **Pa** and the B pillar **Pb,** and a rear door **RD** is arranged at an opening formed between the B pillar **Pb** and the C pillar **Pc.** The restraint portion **B** comprises restraint portions **B1a, B1b** (seatbelt device) of the seats **S1a, S1b** which are provided at the both-side B pillars **Pb,** restraint portions **B2a, B2b** of the seats **S2a, S2b** which are provided at the both-side C pillars **Pc,** and restraint portions **B3a, B3c** of the seats **S3a, S3c** which are provided at the both-side D pillars **Pd.**

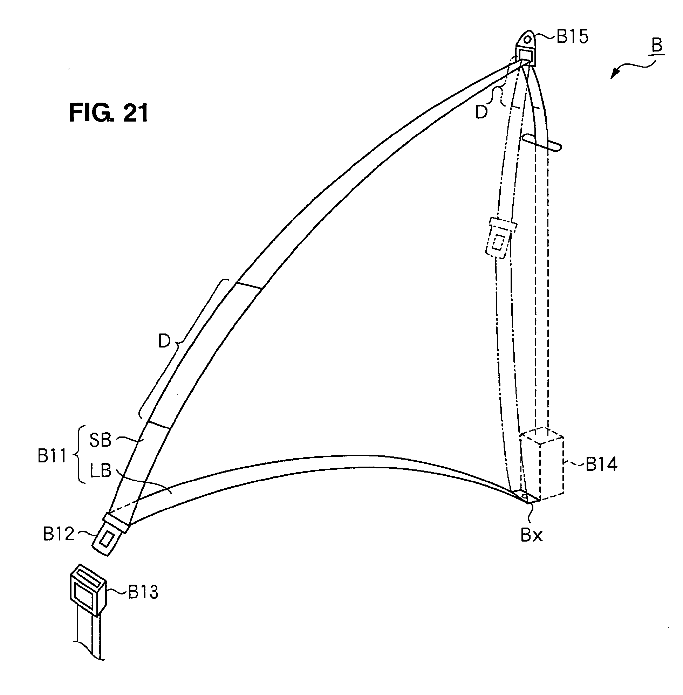

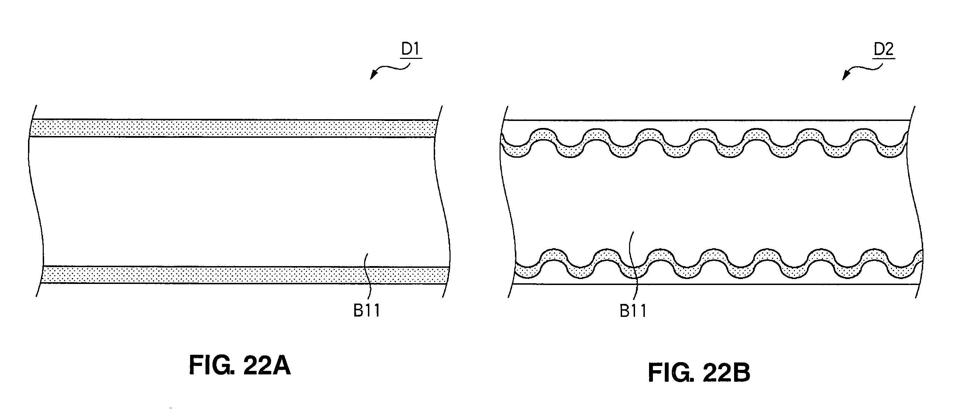

FIG. **21** is a perspective view showing the restraint portion **B.** FIG. **22A** is a diagram showing a distinction pattern **D1** formed on an upper face of the seatbelt **B11** and FIG. **22B** is a diagram showing a distinction pattern **D2** formed on a back face of the seatbelt **B11.** The restraint portion **B** comprises a seatbelt **B11,** a tongue **B12** which is arranged to be movable along the seatbelt **B11,** a buckle **B13** which is provided on the vehicle-body side and engages with the tongue **B12,** a winding portion **B14** which is provided at the vehicle-body inside portion and winds up the seatbelt **B11,** and an anchor **B15** which is provided at the vehicle-body inside portion above the winding portion **B14.** Herein, the restraint portion **B** of the seat **S3b** is not equipped with the above-described winding portion **B14** and anchor **B15.**

The seatbelt **B11** preferably includes a shoulder belt portion **SB** which restrains the shoulder portion and the chest portion of the passenger seated in the seat **S2a** and a lap belt portion **LB** which restrains the waist portion and the stomach portion of the passenger seated on the seat **S2a.** The tongue **B12** determines the length of the shoulder portion **SB** and the lap belt portion **LB** and is positioned at tips of the shoulder portion **SB** and the lap belt portion **LB.** The buckle **B13** is provided between the seats disposed substantially side by side at a location which corresponds to each seat. The winding portion **B14** is a retractor to bias the seatbelt **B11** in a biasing direction and stored in the vehicle-body inside portion (B pillar **Pb,** C pillar **Pc,** D pillar **Pd).** The anchor **B15** supports the seatbelt **B11** which extends upward from the winding portion **B14** so that the seatbelt **B11** can be drawn down toward the shoulder portion of the passenger. The shoulder belt portion **SB** extends from the vehicle-body inside portion to the passenger seated in the seat in its application state, which has a distinction member **D** which is formed on its upper face and its back face.

The distinction member **D** preferably includes the first distinction pattern **D1** which is formed on the upper face of the shoulder belt portion **SB** and the second distinction pattern **D2** which is formed on the back face of the shoulder belt portion **SB.** These distinction patterns **D1, D2** are different from each other. The first distinction pattern **D1** is, for example, comprised of a reflective member which is pasted on or weaved into the upper face along an edge. The second distinction pattern **D2** is, for example, comprised of a reflective member which is pasted on or weaved into the back face along an edge in a zigzag manner. The distinction member **D** is formed at a specified position on the seatbelt **B11** so that it has not been wound up inside the winding portion **B14** when the seatbelt **B11** does not restrain the passenger seated in the seat, that is, when the most part of the seatbelt **B11** has been wound up by the winding portion **B14** so that the seatbelt **B11** may extend almost straightly from the retractor, which is provided between a beltline (a lower edge of a side window) and a vehicle floor, to the shoulder anchor **B15** at the upper portion of the pillar, and also from the shoulder anchor **B15** to a floor anchor **Bx** which is provided near the vehicle floor. Thereby, the distinction member **D** can be properly provided at the shoulder belt portion **SB** by using the existing winding portion **B14,** preventing the winding portion **B14** from becoming large sized. Herein, while the distinction member **D** is provided to improve the distinction function of the shoulder belt portion **SB** in the present embodiment, it is not indispensable for the present invention. Further, while the shoulder belt portion **SB** has the distinction patterns **D1, D2** having different patterns from each other on the both-side faces, it may have either one of the patterns on either one side.

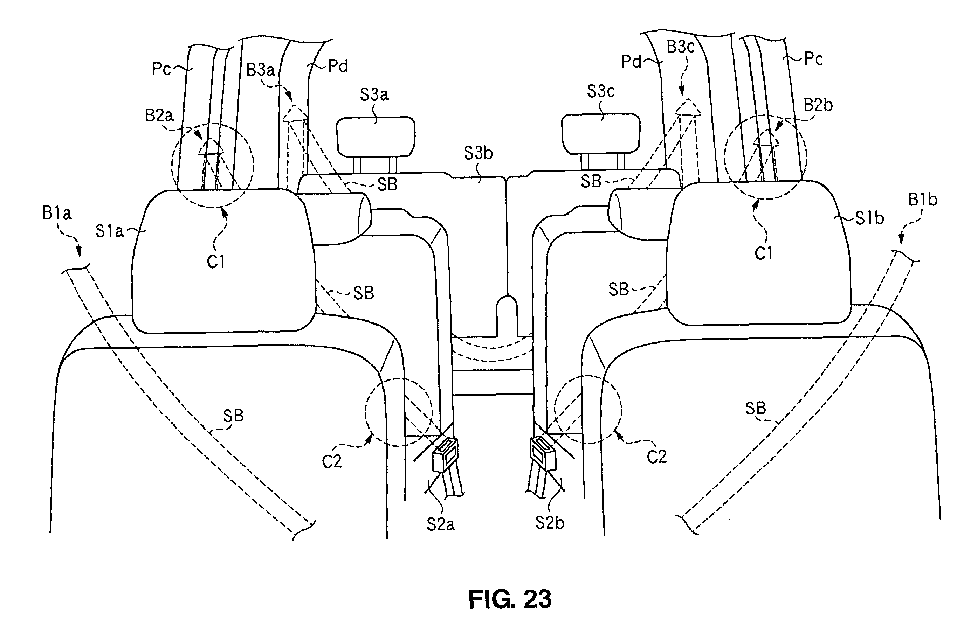

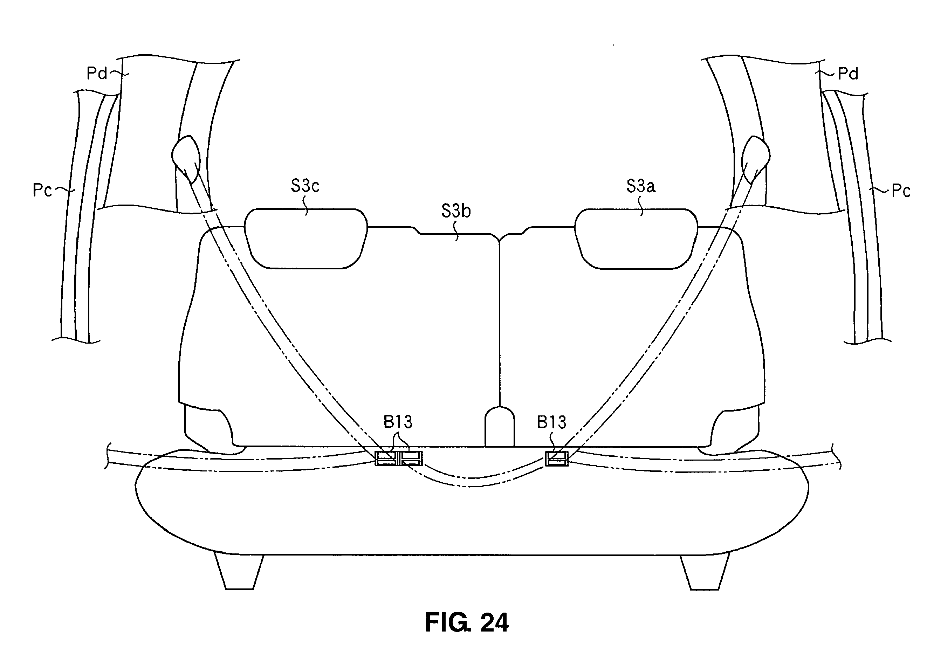

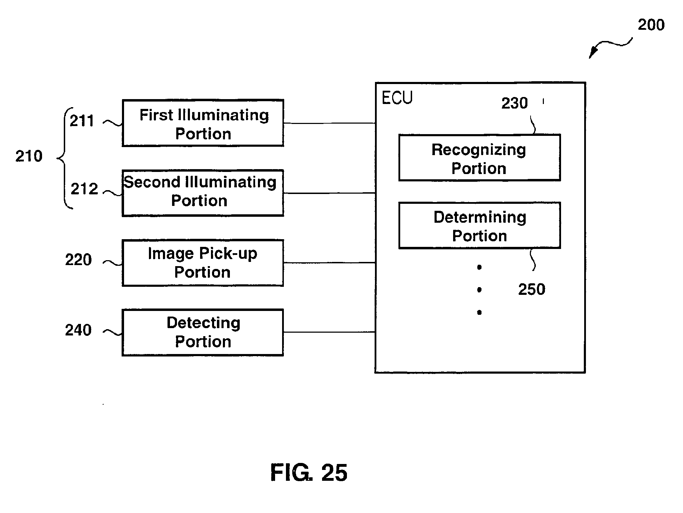

FIG. **23** is a view which is seen rearward from an image pick-up portion **220.** FIG. **24** is an elevation view of the seats **S3a, S3b, S3c.** FIG. **25** is a block diagram showing a functional constitution of a state recognizing device **200.**

The state recognizing device **200** comprises an illuminating portion **210** which is provided in the vehicle compartment and illuminates preferably near-infrared rays into the vehicle compartment, an image pick-up portion **220** which is provided approximately at an upper portion of the vehicle compartment which is located in front of the seatbacks of the seats **S1a, S1b** and picks up images inside the vehicle compartment into which the infrared rays are illuminated by the illuminating means **210,** a recognizing portion **230** which recognizes the state of the vehicle compartment based on the images picked up by the image pick-up means **220,** a detecting portion **240** which detects the engagement state of the tongue **B12** and the buckle **B13,** and a determining portion **250** which determines the application state of the seatbelt **B11** based on the engagement state which is detected by the detecting means **240** and the application state of the shoulder belt portion **SB** which is detected by the recognizing portion **230.**

Herein, the infrared rays are the electromagnetic waves having the wavelength which is longer than that of the visible ray in red but shorter than that of the electric wave. The infrared rays have the wavelength of about 0.7 - 1000im (1mm) and are generally divided into three classes, near-infrared rays, middle-infrared rays and far-infrared rays, depending on the wavelength. The near-infrared rays have the wavelength of about 0.7 - 2.5ìm and are not visible to the naked eye but visible to a CCD camera or the like. Therefore, while the passenger may not feel any problem with the illuminated near-infrared rays from the illuminating portion 210, the images can be properly picked up by the CCD camera or the like. Thus, the near-infrared rays are preferably used in the present embodiment.

A LED (light emitting diode) is used as the illuminating portion 210, for example. The illuminating portion **210** comprises a first illuminating means **211** which is provided at an upper portion of the vehicle compartment which is located in front of the seatbacks of the seats **S1a, S1b** and illuminates the near-infrared rays rearward and a second illuminating means **212** which is located in back of the seatbacks of the seats **S1a, S1b** and in front of the seatbacks of the seats **S2a, S2b** and illuminates the near-infrared rays rearward.

The first and second illuminating portions **211, 212** are positioned at central portions of the vehicle compartment (on a center line **CL)** in the vehicle width direction according to the present embodiment. The first illuminating portion **211** is disposed at an overhead console **202** which is provided at a front end portion of the roof, for example. The second illuminating portion **212** is disposed in back of the first illuminating portion **211.** The illuminating portion **211** illuminates the seats **S1a, S1b,** and the second illuminating portion **212** illuminates the seats **S2a, S2b,** so that the border of the seatbelts and the fist and second row seats can be easily recognized.

The first and second illuminating portions **211, 212** are connected to an electronic control unit ECU and conduct their illuminations based on control signals of the ECU. These illuminating portions **211, 212** illuminate the near-infrared rays substantially at the same time. That is, the illumination command signals are supplied to the illuminating portions **211, 212** substantially at the same time. Herein, while the illuminating portion **210** of the present embodiment is positioned at the central portion of the vehicle compartment in the vehicle width direction for reducing the number of the illuminating portion, that may be positioned at various portions, not the central portion, due to a relatively low costs of the LED.

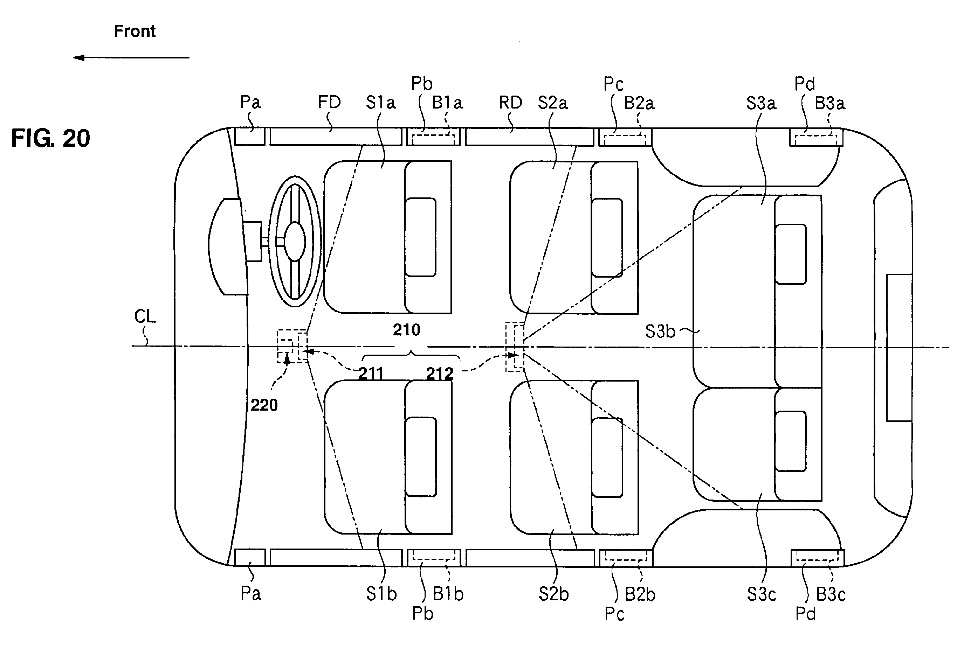

The image pick-up portion **220** is the CCD camera, for example, and provided at the central portion of the vehicle compartment in the vehicle width direction as shown in FIG. **20****.** The image pick-up portion **220** is positioned at the overhead console **202** like the first illuminating portion **211.** Further, the image pick-up portion **220** is connected to the ECU and transmits the images picked up to the ECU based on the control signal of the ECU.

The recognizing portion **230** recognizes the application state of the shoulder belt portions **SB** of the seats **S1a, S1b, S2a, S2b.** The recognizing means **230** of the present embodiment may recognize a state of a specified portion **C1** of the shoulder belt portion **SB** which is located near the vehicle-body inside portion which is not hidden by the first row seat. That is, the recognizing means **230** may recognize the state of the shoulder belt portion **SB** between the vehicle-body inside portion and the passenger seated in the seats **S2a** or **S2b.** The above-described specified portion **C1** of the shoulder belt portion **SB** does not overlap with the passenger seated in the seats **S1a** or **S1b,** so that the recognition of the application state can be improved. Further, the recognizing portion **230** may recognize the application state of the shoulder belt portion **SB,** such as its twisted state, by recognizing the first and second distinction patterns **D1, D2** at the specified portions **C1** and **C2 (C2** is a lower portion of the shoulder belt portion as shown in FIG. **23****).** The recognizing portion **230,** which is preferably a central processing unit CPU of the ECU, for example, executes various recognition processing based on the picked-up images from the image pick-up portion **220** and the signals from the detecting portion **240.**

The detecting portion **240** is a buckle switch to detect that the tongue **B12** is applied to the buckle **B13.** The detecting portion **240** is connected to the ECU. A traveling drive switch and the like are also used as the detecting portion **240,** for example. The determining portion **250** is CPU of the ECU, for example, and detects whether or not the tongue **B12** which corresponds to the seat of the passenger is properly applied to the buckle **B13** which corresponds to the seat of the passenger. That is, in case the seats are arranged close to each other, there is a concern that the tongue **B12** is mistakenly applied to the buckle **B13** of the seat. Accordingly, the determining portion **250** is provided to prevent this application mistake.

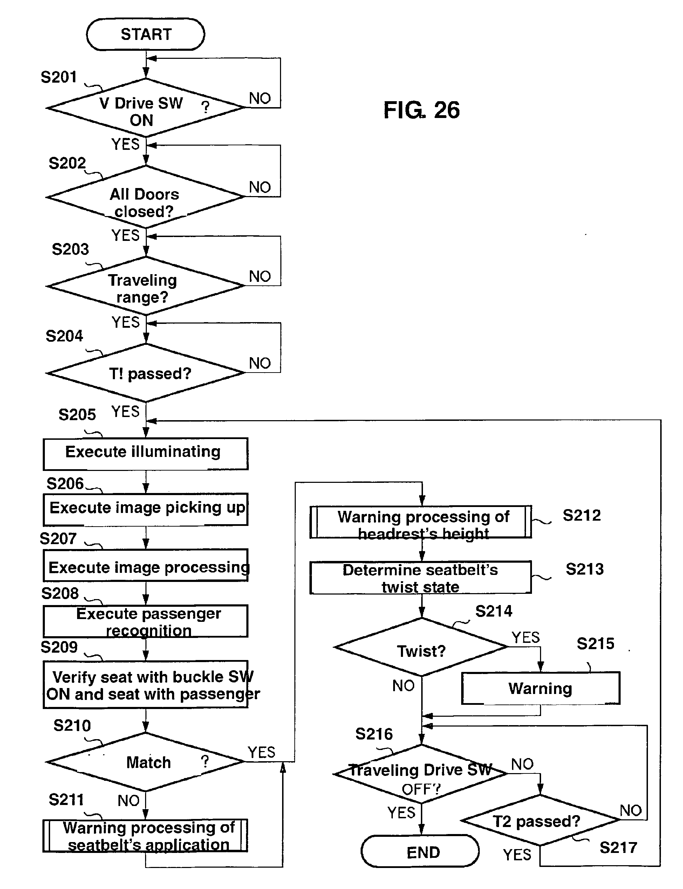

FIG. **26** is an example of a flowchart of the state recognizing device **200.** At first, it is determined whether the traveling drive switch is ON in step **S201.** When the ON is determined in the step **S201,** it is determined in step **S202** whether all doors are closed or not. When it is determined in the step **S202** that all of the doors are closed, it is determined in step **S203** whether the gear is a driving range (D range) or not. When the traveling range is determined in the step **S203,** it is determined in step **S204** whether or not a specified time T1 (1-3 seconds, for example) has passed from the gear change to the traveling range. When the respective conditions of the steps **S201 - 204** are not met, the respective determinations are repeated until those conditions are met.

When the passage of the time T1 is determined in the step **S204,** the illuminating portion **210** illuminates the near-infrared rays into the vehicle compartment in step **S205.** Then, the image pick-up portion **230** picks up the images of the vehicle compartment into which the near-infrared rays are illuminated in step **S206.** In the next step **S207,** the image pick-up portion **240** executes the specified image processing (filter processing, for example), and the sitting of passengers are recognized in step **S208.** For example, the passenger's head portion (including eyes and mouth of the passenger) and its position are recognized as this recognition processing of the passenger seated. Then, in step **S209,** the seat with the buckle switch ON and the seat which is recognized to have the passenger seated therein through the image recognition are determined or verified. Subsequently, it is determined in step **S210** whether this verification matches for all of the seats or not. When it is determined that there is some seat in which the verification does not match in the step **S210,** there is a possibility that the sitting of the passenger is not determined due to the shape of the passenger's hair, the direction of the passenger's face, or the like. Accordingly, in the next step **S211,** the control proceeds to a routine of determining the passenger based on the position of the seatbelt.

In the next step **S212,** the warming is conducted when the height of the headrest is not appropriate. Then, in the next step **S213** the twist state of the seatbelt is recognized, and it is determined based on this recognition result whether the twist at the seatbelt occurs or not in the next step **S214.** When the occurrence of the twist is determined in the step **S214,** the passenger is warned of this concern of reduction of the seatbelt effect. Then, it is determined in step **S216** whether the traveling drive switch is OFF or not. When it is determined that the traveling drive switch is ON in the step **S216,** it is determined in step **S217** whether a timer has counted a specified time T2 (0.01-1 second, for example) or not. When the count of the specified time T2 is determined in the step **S217,** the control returns to the step **S205.** When the count of the specified time T2 is not determined in the step **S217,** the control returns to the step **S216.** When the traveling drive switch OFF is determined in the step **S216,** the control ends.

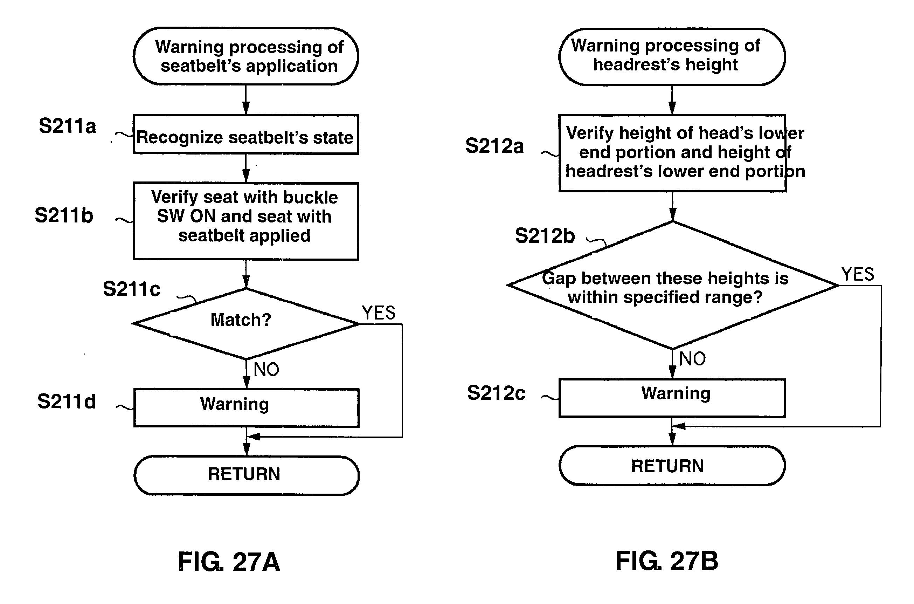

Hereinafter, the detailed processing of the steps **S211** and **S212** will be described. FIG. **27A** is a specific flowchart of a seatbelt application warning processing (step **S211),** and FIG. **27B** is a specific flowchart of a headrest height warning processing (step **S212).**

At first, the detailed processing of the step **S211** will be described. The application state of the seatbelt is recognized in step **S211 a.** This recognition of application state means recognizing whether the seatbelt is applied or not. Then, in the next step **S211 b** the seat with the buckle switch ON and the seat with the seatbelt applied thereto are verified. In the next step **S211c,** it is determined whether or not the seat with the buckle switch ON which is detected by the detecting portion **240** competently matches the seat with the seatbelt applied thereto which is detected through the image recognizing processing. When it is determined that they are not matched in the step **S211c,** there is a concern that the tongue is mistakenly attached to an improper buckle. Accordingly, the warning of that concern is conducted and the strings of processing of the step **S211** ends. Meanwhile, when the complete matching is determined in the step **S211c,** the processing of the step **S211** ends without warning.

Next, the detailed processing of the step **S212** will be described. The height of the lower end portion (chin portion) of the passenger's head portion and the height of the lower end portion of the headrest are verified in step **S212a.** These heights are obtained by the above-described image pick-up processing. Then, it is determined in step **S212b** whether or not a gap in the height between the lower end portion of the passenger's head portion and the headrest's lower end portion is within a specified range (□}5cm, for example). When it is determined in the step **S212b** that that gap is not within the specified range, there is a concern that the safety of the passenger may not be ensured (that is, an excessive impact would act on the passenger's neck). Accordingly, the passenger is warned of that concern in step **S212c,** and the strings of processing of the step **S212** ends. Meanwhile, when it is determined in the step **S212b** that that gap is within the specified range, the processing of the step **S212** ends without warning. As described above, according to the present embodiment, the application state of the seatbelts of the seats disposed longitudinally can be recognized more accurately, restraining the costs up.

The present invention should not be limited to the above-descried embodiments, and any other modifications and improvements may be applied within the scope of the present invention, as defined in the appended claims.

## Claims

1. A vehicle interior state recognition device, comprising:
an illuminating means **(15; 210)** for illuminating infrared rays into a vehicle compartment;
an image pick-up means **(16; 220)** for picking up an image inside the vehicle compartment into which the infrared rays are illuminated by said illuminating means **(15; 210);** and
a recognizing means **(18; 18'; 230)** for recognizing specified information based on the image picked up by said image pick-up means **(16; 220),**
wherein objects of the image picked up by said image pick-up means **(16; 220)** include a seat **(3; 2-6; S1a, S1b, S2a, S2b)** which is movable relative to a vehicle body and a passenger **(B; A-D)** seated in the seat **(3; 2-6; S1a, S1b, S2a, S2b),** and said recognizing means **(18; 18'; 230)** determines a size of the passenger **(B)** seated in the seat **(3)** and/or a positional relationship between the seat **(2-6; S1a, S1b, S2a, S2b)** and the passenger **(A-D)** seated in the seat by comparing at least part of contour of the seat **(3; 2-6; S1a, S1b, S2a, S2b)** with at least part of contour of the passenger **(B; A-D)** seated in the seat on the image picked up.

2. The vehicle interior state recognition device of claim 1, wherein said recognizing means **(18)** determines the size of the passenger **(B)** seated in the seat **(3)** by comparing the contour of the seat **(3)** with the contour of the passenger **(B)** seated in the seat **(3)** on the image picked up.

3. The vehicle interior state recognition device of claim 1 or 2, wherein said seat comprises a couple of seats **(2, 3)** which are disposed substantially side by side in a vehicle width direction, and said image pick-up means **(16)** is provided at a specified position which enables the image pick-up means **(16)** to pick up both images of the seats **(2, 3)** at the same time, wherein said seats, images of which are picked up by the image pick-up means **(16),** are preferably a driver's seat **(2)** and a passenger's seat (3).

4. The vehicle interior state recognition device of any one or more of the preceding claims, wherein said image pick-up means **(16)** is provided at around a pillar member which extends substantially vertically along a side wall of the vehicle compartment, wherein said image pick-up means **(16)** is preferably provided at around an upper end portion of a front pillar **(10)** as the pillar member and/or a projecting portion **(22a)** is provided at around an upper end portion of a pillar trim **(22)** which forms an inside face of the front pillar **(10),** and said image pick-up means **(16)** is stored in the projecting portion **(22a).**

5. The vehicle interior state recognition device of any one or more of the preceding claims, wherein said recognizing means **(18)** further determines a degree of concentration on a driving operation of the passenger **(A)** seated in the driver's seat **(2)** based on a position of a head portion of the passenger **(A)** seated in the driver's seat **(2).**

6. The vehicle interior state recognition device of any one or more of the preceding claims, wherein said image pick-up means **(16)** is provided at a side portion of the vehicle compartment on the side of the driver's seat **(2),** and there is provided a recognizing member **(32)** which is comparable with the size of the passenger **(B)** substantially at an inside face of a seatback **(3a)** of the passenger's seat **(3).**

7. The vehicle interior state recognition device of any one or more of the preceding claims, wherein said seat **(2-6)** is equipped with a headrest **(51-56)** at an upper end thereof, the height of the headrest **(51-56)** being adjustable, and said recognizing means **(18')** further determines the height of the headrest **(51-56)** relative to the passenger **(A-D)** seated in the seat **(2-6)** based on an image of the headrest **(51-56)** which is picked up by said image pick-up means **(16),** wherein said image pick-up means **(16)** is preferably provided at a front side position of the vehicle compartment which enables the image pick-up means **(16)** to pick up the image of the headrest **(51-56)** from the front side of the vehicle, wherein said seat preferably comprises a couple of seats **(2, 3)** which are disposed substantially side by side in a vehicle width direction, and/or said image pick-up means **(16)** is provided at said specified position which enables the image pick-up means **(16)** to pick up the images of the both headrests **(51, 52)** of the seats **(2, 3)** from the front side of the vehicle at the same time.

8. The vehicle interior state recognition device of any one or more of the preceding claims 13, wherein a rear seat **(4, 5)** is provided behind the driver's seat **(2)** and the passenger's seat **(3),** and/or said image pick-up means **(16)** picks up respective images of a headrest **(53, 54)** of the rear seat **(4, 5)** and/or the headrests **(51, 52)** of the driver's seat **(2)** and the passenger's seat **(3),** preferably at the same time.

9. The vehicle interior state recognition device of any one or more of the preceding claims, wherein the objects of the image picked up by said image pick-up means **(16)** include a head portion of the passenger **(A)** seated in the driver's seat **(2),** and/or said recognizing means **(18')** further determines a degree of concentration on a driving operation of the passenger **(A)** seated in the driver's seat **(2),** preferably based on a position of the picked up image of the head portion of the passenger **(A)** seated in the driver's seat **(2).**

10. The vehicle interior state recognition device of any one or more of the preceding of claims, wherein said recognizing means **(18')** determines a difference in the height between the headrest **(51-56)** of the seat **(2-6)** and the head portion of the passenger **(A-D)** seated in the seat **(2-6).**

11. The vehicle interior state recognition device of any one or more of the preceding claims, wherein a couple of first seats **(S1a, S1b)** which are disposed substantially side by side and a second seat **(S2a, S2b)** which is provided behind the first seats **(S1a, S1b)** are provided in the vehicle compartment, the first seats **(S1a, S1 b)** and the second seat **(S2a, S2b)** have seatbelts **(B11)** for restraining passengers seated therein, each of the seatbelts **(B11)** having a shoulder belt portion **(SB)** for restraining a shoulder portion of each of the passengers, said image pick-up means **(220)** is provided at an upper portion of the vehicle compartment which is located in front of seatbacks of the first seats **(S1a, S1b),** said illuminating means **(210)** comprises a first illuminating means **(211)** which is provided at an upper portion of the vehicle compartment which is located in front of the seatbacks of the first seats **(S1a, S1b)** and illuminates infrared rays rearward and/or a second illuminating means **(212)** which is located in back of the seatbacks of the first seats **(S1a, S1b)** and in front of a seatback of the second seat **(S2a, S2b)** and illuminates infrared rays rearward, and said recognizing means **(230)** determines at least a sitting state of the passenger seated in the second seat **(S2a, S2b).**

12. The vehicle interior state recognition device of claim 11, wherein said recognizing means **(230)** is configured to recognize an application state of the shoulder belt portion **(SB)** of the first seats **(S1 a, S1 b)** and/or an application state of the shoulder belt portion **(SB)** of the second seat **(S2a, S2b).**

13. The vehicle interior state recognition device of claim 11 or 12, wherein said second illuminating means **(212)** is configured to illuminate near-infrared rays substantially at the same time as said first illuminating means **(211)** does and/or said image pick-up means **(220)** is positioned substantially at a central portion of the vehicle compartment in a vehicle width direction and/or said recognizing means **(230)** is configured to recognize a state of a specified portion of the shoulder belt portion **(SB)** which is located near a vehicle-body inside portion.

14. The vehicle interior state recognition device of any one or more of the preceding claims, wherein said shoulder belt portion **(SB)** extends from a pillar **(Pc)** at the vehicle-body inside portion toward the passenger seated in the second seat **(S2a, S2b)** in an application state thereof, and said recognizing means **(230)** is configured to recognize the state of the shoulder belt portion **(SB)** between said pillar **(Pc)** and the passenger seated in the second seat **(S2a, S2b).**

15. A method of recognizing a vehicle interior state comprising the steps of:
illuminating infrared rays into a vehicle compartment;
picking up an image inside the vehicle compartment into which the infrared rays are illuminated by said illuminating means **(15; 210);** and
recognizing specified information based on the image picked up by said image pick-up means **(16; 220),**
wherein objects of the image picked up by said image pick-up means **(16; 220)** include a seat **(3; 2-6; S1a, S1b, S2a, S2b)** which is movable relative to a vehicle body and a passenger **(B; A-D)** seated in the seat **(3; 2-6; S1a, S1b, S2a, S2b),** and
determining a size of the passenger **(B)** seated in the seat (3) and/or a positional relationship between the seat **(2-6; S1a, S1b, S2a, S2b)** and the passenger **(A-D)** seated in the seat by comparing at least part of contour of the seat **(3; 2-6; S1a, S1b, S2a, S2b)** with at least part of contour of the passenger **(B; A-D)** seated in the seat on the image picked up.
